(19) Europäisches Patentamt
European Patent Office
Office européen des brevets

(11) EP 3 989 153 A1

(12) **EUROPEAN PATENT APPLICATION**
published in accordance with Art. 153(4) EPC

(43) Date of publication:
**27.04.2022 Bulletin 2022/17**

(21) Application number: **20826283.2**

(22) Date of filing: **18.06.2020**

(51) International Patent Classification (IPC):
***G06Q 30/02** (2012.01)*

(52) Cooperative Patent Classification (CPC):
**G06Q 30/0264; G06Q 30/02**

(86) International application number:
**PCT/JP2020/024019**

(87) International publication number:
**WO 2020/256078 (24.12.2020 Gazette 2020/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.06.2019 JP 2019114836**

(71) Applicant: **Dentsu Inc.**
**Tokyo 105-7001 (JP)**

(72) Inventors:
- **AKINO, Rina**
  **Tokyo 105-7001 (JP)**
- **ARAKAWA, Dai**
  **Tokyo 105-7001 (JP)**
- **KAWASE, Tomohiro**
  **Tokyo 105-7001 (JP)**
- **TACHIBANA, Ryohei**
  **Tokyo 105-7001 (JP)**
- **IWAMOTO, Yasutaka**
  **Tokyo 105-7001 (JP)**
- **KISHIMOTO, Wataru**
  **Tokyo 105-7001 (JP)**

(74) Representative: **SSM Sandmair Patentanwälte Rechtsanwalt Partnerschaft mbB**
**Joseph-Wild-Straße 20**
**81829 München (DE)**

(54) **SPOT PLANNING EVALUATION SYSTEM, SPOT PLANNING EVALUATION DEVICE, AND PROGRAM**

(57) To place an efficient advertisement to a particular target. A spot planning evaluation system according to one aspect of the present disclosure includes: an acquisition unit configured to acquire information for identifying effective areas configured with advertisement slots with particular-target content rates equal to or larger than a given threshold; and a control unit configured to perform, in order that a sum total of total audience ratings (acquired gross rating point (GRP) rates) expected to be acquired by the advertisement slots of the effective areas with respect to all advertisement slots during a given period becomes a given value, adjustment of acquired GRP rates of all the advertisement slots during the given period.

Fig. 2

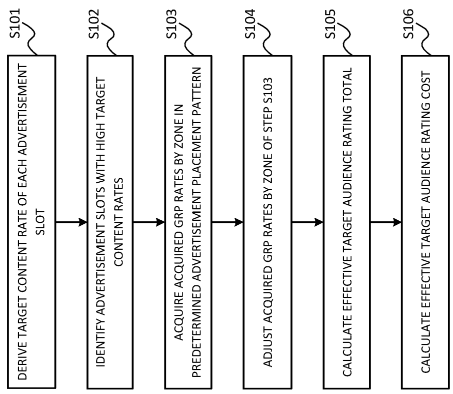


EP 3 989 153 A1

## Description

[Technical Field]

The present disclosure relates to a spot planning evaluation system, a spot planning evaluation apparatus and a program.

[Background Art]

In television broadcast, CMs (commercial messages) are broadcast as advertisements. The CMs are roughly classified into time CMs and spot CMs. The time CMs are CMs broadcast in slots that are bought and sold being integrated with a program and may be called program commercial messages, program CMs or sponsor CMs.
The spot CMs correspond to CMs broadcast in CM time slots determined by television stations. The spot CMs are classified into station breaks (SB) broadcast between programs, participations (PT) (or participating CMs) inserted in a program but are not attached with a sponsor display, and the like.
Existing spot CM planning (which may be called selection of advertisement slots, plan making, buying, quotation, spot planning and the like) is performed based on an advertisement placement pattern determined in advance (for example Patent Literature 1).

[Citation List]

[Patent Literature]

[Patent Literature 1]

Japanese Patent Laid-Open No. 2000-124867

[Summary of Invention]

[Technical Problem]

As for the existing spot CM planning (which may be called spot planning), however, since there is a restriction to follow an existing placement pattern, there is a problem that more effective planning for a particular target audience cannot be provided.
Therefore, one of objects of the present disclosure is to provide a spot planning evaluation system, a spot planning evaluation apparatus and a program capable of placing an efficient advertisement for a particular target.

[Solution to Problem]

A spot planning evaluation system according to one aspect of the present disclosure includes: an acquisition unit configured to acquire information for identifying effective areas configured with advertisement slots with particular-target content rates equal to or larger than a given threshold; and a control unit configured to perform, in order that a sum total of total audience ratings (acquired gross rating point (GRP) rates) expected to be acquired by the advertisement slots of the effective areas with respect to all advertisement slots during a given period becomes a given value, adjustment of acquired GRP rates of all the advertisement slots during a given period.

[Advantageous Effect of Invention]

According to one aspect of the present disclosure, it is possible to place an efficient advertisement for a particular target.

[Brief Description of Drawings]

[Figure 1] Figure 1 is a diagram showing an example of a schematic configuration of a spot planning evaluation system according to one embodiment.
[Figure 2] Figure 2 is a diagram showing an example of a flowchart of a spot planning evaluation method according to the embodiment.

[Figure 3] Figure 3 is a diagram showing an example of decision of ESP zones.

[Figure 4] Figure 4 is a diagram showing an example of acquired GRP rates.

[Figure 5] Figure 5 is a diagram showing an example of an ESP-zone desired rate.

[Figure 6] Figures 6A and 6B are diagrams showing examples of acquired GRP rates (before adjustment) of the ESP zones and outside the ESP zones, respectively.

[Figure 7] Figure 7 is a diagram showing an example of each acquired GRP rate after acquired GRP rate control is applied.

[Figure 8] Figure 8 is a diagram showing an example of effective target audience ratings.

[Figure 9] Figure 9 is a diagram showing an example of effective target audience ratings in the case of omitting the acquired GRP control.

[Figure 10] Figure 10 is a diagram showing an example of a functional configuration of an evaluation apparatus according to the embodiment.

[Figure 11] Figure 11 is a diagram showing an example of a hardware configuration of the evaluation apparatus and the like according to the embodiment.

[Description of Embodiment]

Existing spot CM planning (which may be called buying, quotation or the like) is performed based on a household audience rating in the case of assuming an advertisement placement pattern determined in advance. As the advertisement placement pattern, there are, for example, an inverted L type, an all-day type, an inverted E-shaped type, an inverted C-shaped type, an inverted F type, a midnight type, an all-daytime type and the like. Note that, in the present disclosure, the advertisement placement pattern may be replaced with a placement pattern, a development pattern, an advertisement pattern, a sales pattern or the like.

Generally, spot CM planning is performed in the unit of total audience rating (gross rating point (GRP)). Cost per GRP is called cost per point. Generally, the cost per point differs for each placement pattern. A spot CM fee in the case of selecting a certain placement pattern may be calculated based on GRP × cost per point.

As for the existing spot CM planning (which may be called spot planning), however, since there is a restriction to follow an existing placement pattern, there is a problem that more effective planning cannot be provided for a particular target.

Therefore, the present inventors got an idea of a mechanism capable of realizing evaluation for performing buying of advertisement slots appropriate for a target, utilizing various data.

An embodiment of the present disclosure will be described below in detail with reference to accompanying drawings. In the description below, the same units are given the same reference numerals. Since the same units have the same name and the same function, detailed description will not be repeated.

(Spot planning evaluation system)

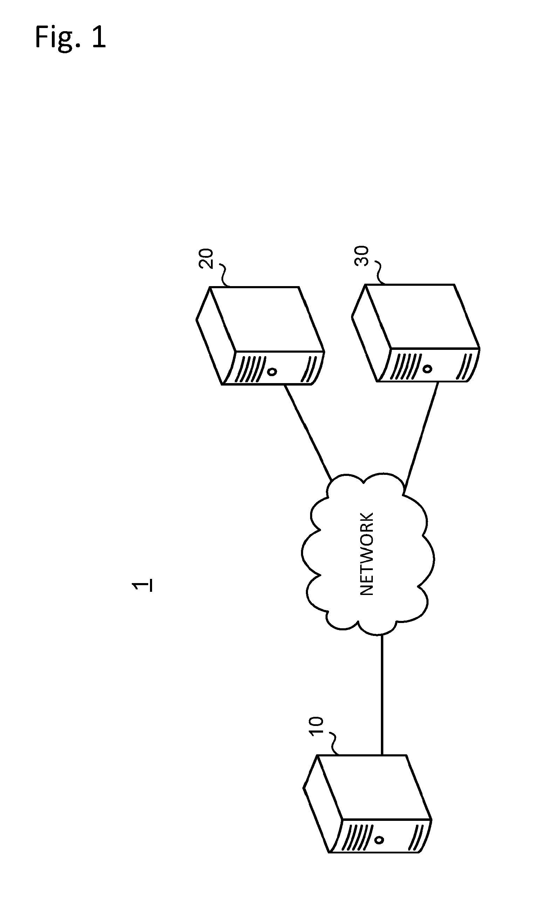

Figure 1 is a diagram showing an example of a schematic configuration of a spot planning evaluation system according to one embodiment. A spot planning evaluation system 1 shown in Figure 1 includes a spot planning evaluation apparatus 10, a broadcast distribution apparatus 20 and an audience rating management apparatus 30.

The spot planning evaluation apparatus 10 is an apparatus to try exchange of advertisement slots among a plurality of advertisement campaigns and provide information about an exchange result. Hereinafter, the spot planning evaluation apparatus 10 is also called simply the evaluation apparatus 10 below.

The evaluation apparatus 10 may be a mobile terminal (a mobile communication terminal) such as a mobile phone, a smartphone and a tablet type terminal or may be a fixed communication terminal such as a personal computer (PC) and a server. In other words, the evaluation apparatus 10 in the present disclosure can be replaced with a communication device.

The evaluation apparatus 10 may communicate with a network (the Internet and the like) wiredly and/or wirelessly (via, for example, LTE (Long Term Evolution), NR (New Radio), Wi-Fi (registered trademark) and the like).

The broadcast distribution apparatus 20 is an apparatus to distribute broadcast to TVs (televisions). Here, the televisions (television receivers) may be apparatuses having a function of receiving at least one of terrestrial broadcast, broadcasting by BS (Broadcasting Satellite)/CS (Communications Satellite), Internet broadcasting (Internet television) and the like. For example, the televisions may be multi-function televisions, smart TVs, IP (Internet Protocol) TVs, set top boxes or the like.

Note that broadcasting means transmission of telecommunication intended to be directly received by the public, and may include radio broadcasting and Internet broadcasting.

The audience rating management apparatus 30 is an apparatus to perform aggregation for an actual audience rating of a program broadcast on televisions. The audience rating may be stored for a given time unit (for example, a second, minute or hour). The audience rating management apparatus 30 may transmit information about the audience rating to other apparatuses (for example, the evaluation apparatus 10) via a network.

The audience rating management apparatus 30 may be, for example, an apparatus managed by a television audience rating surveyor. The audience rating management apparatus 30 may acquire data of viewing histories from pieces of measuring equipment connected to televisions of given households (for example, survey cooperating households) and manage the data. Note that an audience rating may be calculated or predicted from the data.

In the audience rating management apparatus 30, an audience rating for each given target (users corresponding to a given attribute) (an individual audience rating of the target) may be recorded.

Note that, in the present disclosure, targets are assumed to correspond to gender/age categories used in the field of marketing (a C (Child) layer, a T (Teen) layer, M (Male) 1 to M3 layers, and F (Female) 1 to F3 layers) but are not limited to this classification.

An example of a functional configuration and hardware configuration of each apparatus such as the evaluation apparatus 10 will be described later.

Note that the above system configuration is a mere example and the system configuration is not limited to the above system configuration. For example, for each kind of apparatus, only one is included in Figure 1, but the number for each kind of equipment is not limited to one, and more than one may exist. The spot planning evaluation system 1 may be configured so that a part of the apparatuses are not included or may be configured so that a function of one apparatus is realized by a plurality of apparatuses.

A configuration is also possible in which functions of a plurality of apparatuses are realized by one apparatus. For example, at least two of the evaluation apparatus 10, the broadcast distribution apparatus 20 and the audience rating management apparatus 30 may be implemented on one server.

(Spot planning evaluation method)

A spot planning evaluation method according to the embodiment of the present disclosure will be described below. Each spot planning evaluation method may be applied to the spot planning evaluation system described above.

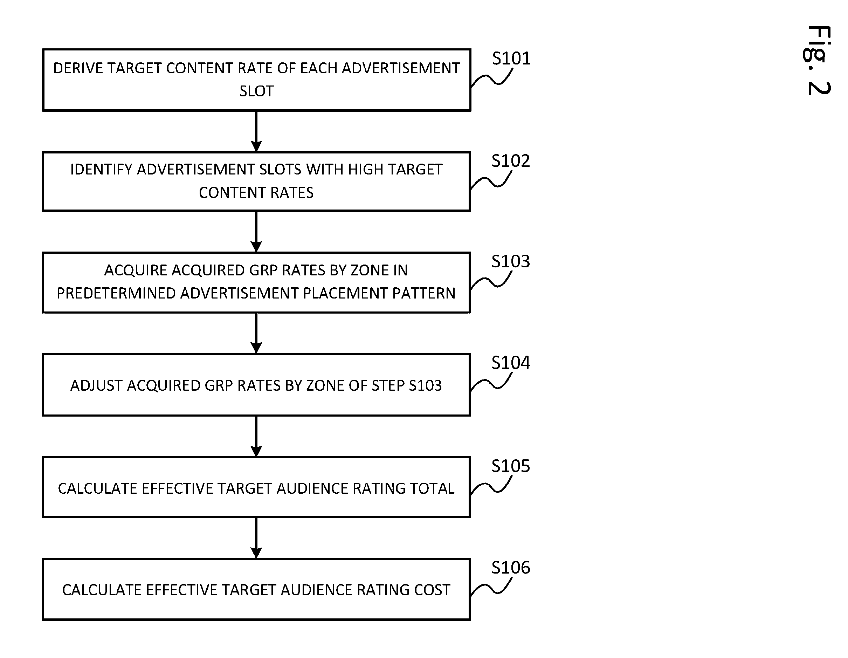

Figure 2 is a diagram showing an example of a flowchart of the spot planning evaluation method according to the embodiment.

At step S101, the evaluation apparatus 10 derives a target content rate of each advertisement slot of a certain broadcasting station (which may be replaced with a channel) for a given period (for example, one week). Note that, in the present disclosure, an advertisement slot may be replaced with a time slot, a zone or the like.

The target content rate may be calculated, for example, by Equation 1 below.

(Equation 1) Target content rate = individual audience rating of the target / audience rating at the time of buying

The target content rate may correspond to a value obtained by dividing an individual audience rating of the target by an audience rating at the time of buying. For example, if a household audience rating of a certain advertisement slot at the time of buying is 10%, and an acquired individual audience rating of the target is 5%,
then a target content rate = 5/10 = 0.5 (or 50%) may be determined. Note that, the individual audience rating of the target may mean a rate of viewers of a certain target layer relative to all individuals corresponding to the target layer.

Note that, in the present disclosure, the audience rating at the time of buying may be a household audience rating or may be an individuals' overall audience rating which is an audience rating obtained by totalizing real-time viewing and time-shift viewing during seven days after broad cast (which may be called "All&P+C7 (Program + Commercial 7)" or the like).

The evaluation apparatus 10 may acquire (for example, receive) information for deriving the target content rate. For example, the evaluation apparatus 10 may acquire information about an individual audience rating of the target, information about an audience rating at the time of buying and the like for each advertisement slot. The evaluation apparatus 10 may acquire (receive) these pieces of information from the audience rating management apparatus 30.

The information for deriving the target content rate may include information about a program to which an advertisement is assigned (which may be called program information). The program information may include, for example, a broadcast date and time (which may include start time, end time, a day of the week, time length of the program and the like), a time rank (a CM fee rank), a genre of the program, information about content of the program, keywords about the program, a predicted audience rating of the program, and the like.

At step S102, the evaluation apparatus 10 identifies advertisement slots with high target content rates. The advertisement slots with high target content rates may be called effective target zones, effective zones, ESP zones or the like (hereinafter called ESP zones).

For example, when the target content rate of a certain advertisement slot is higher than a given threshold (or a value within a given range), the evaluation apparatus 10 may judge that the advertisement slot is an ESP zone. The given threshold may be called an ESP zone threshold or the like.

Here, the given threshold (or range) may be determined, for example, from target content rates of all advertisement slots during a given period (for example, one week, one month or the like) of a certain broadcasting station (for example, may be determined as an average of the target content rates of all the advertisement slots). Further, the evaluation apparatus 10 may judge the given threshold (or range) based on an input from outside (for example, a setting by a user).

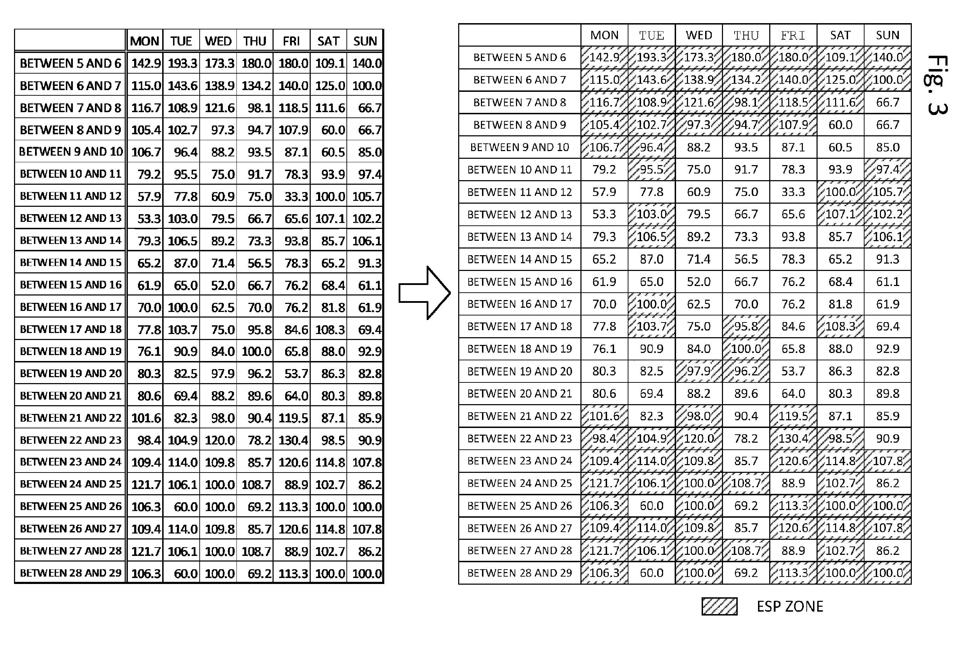

Figure 3 is a diagram showing an example of decision of the ESP zones. A table (a time table) on the left side of Figure 3 shows an example of the target content rate of each advertisement slot of the certain broadcasting station derived at the above step S101. The advertisement slots are divided according to the days of the week (Monday to Sunday) and by one-hour intervals (a time slot between 5 o'clock and 6 o'clock up to a time slot between 28 o'clock and 29 o'clock) in this example, but positions of advertisement slots, a dividing way and the like are not limited thereto.

A table on the right side of Figure 3 shows the ESP zones identified at step S102. In this example, the given threshold described above is assumed to be 94.2 [%] corresponding to an average of target content rates of all of shown advertisement slots, and advertisement slots having target content rates larger than this value are shown as the ESP zones.

Note that, though all rates and ratings such as the target content rate and the audience rating are shown in the unit of percentage, the unit is not limited thereto.

Since the table on the right side of Figure 3 is shown so that the ESP zones are identified, it may be called a target content rate heat map, an ESP zone heat map or the like.

In the subsequent flow, the example based on the time tables shown in Figure 3 will be described.

Next, at step S103, the evaluation apparatus 10 acquires acquired GRP rates by zone in a given advertisement placement pattern. Here, the given advertisement placement pattern may correspond, for example, to a normal all-day type advertisement placement pattern or other advertisement placement patterns.

An acquired GRP rate by zone may mean a rate of spot CM assignment to each advertisement slot when all the advertisement slots of the certain broadcasting station during a given period

(for example, one week) is assumed as 100%. In other words, the acquired GRP rate by zone may correspond to a GRP rate expected to be acquired by each advertisement slot. The acquired GRP rate by zone may be called an acquired GRP rate, an acquired total audience rating rate, merely a GRP rate, or the like.

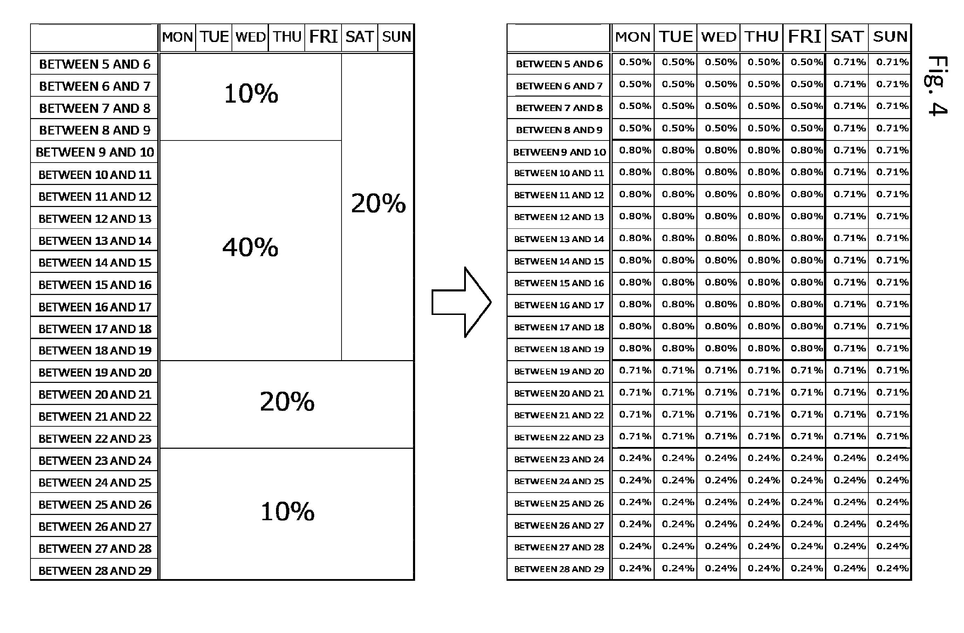

Figure 4 is a diagram showing an example of the acquired GRP rates. A table on the left side of Figure 4 shows an example of assignment of GRPs corresponding to an all-day type advertisement placement pattern. Each of numerical values in percent shown in Figure 4 corresponds to an acquired GRP rate of the whole of a certain area. For example, in Figure 4, it is shown that a GRP of 40% relative to the whole placement budget is acquired in a time slot between 9 o'clock and 19 o'clock on Monday to Friday.

A table on the right side of Figure 4 shows an example in which the table on the left side is shown in more detail (each acquired GRP rate is divided to individual advertisement slots). Thus, an acquired GRP rate of the whole area of the table on the left side may correspond to a sum total of acquired GRP rates of all the advertisement slots in the area.

What is obtained by equally allocating a sum total of acquired GRP rates of each area in the table on the left side of Figure 4 to advertisement slots of the area corresponds to the table on the right side. For example, the above described 40% that corresponds to the time slot between 9 o'clock and 19 o'clock on Monday to Friday is equally allocated to the number of advertisement slots ($10\times5=50$ slots) in the area, and a value of 40%/50=0.80% is shown in each advertisement slot in this area in the table on the right side.

Next, at step S104, the evaluation apparatus 10 adjusts the acquired GRP rates by zone of step S103 based on an ESP-zone desired rate.

Here, the ESP-zone desired rate may correspond to a sum total of acquired GRP rates of all advertisement slots in the ESP zones when a sum total of acquired GRP rates of all the advertisement slots of the certain broadcasting station during a given period (for example, one week) is assumed as 100%.

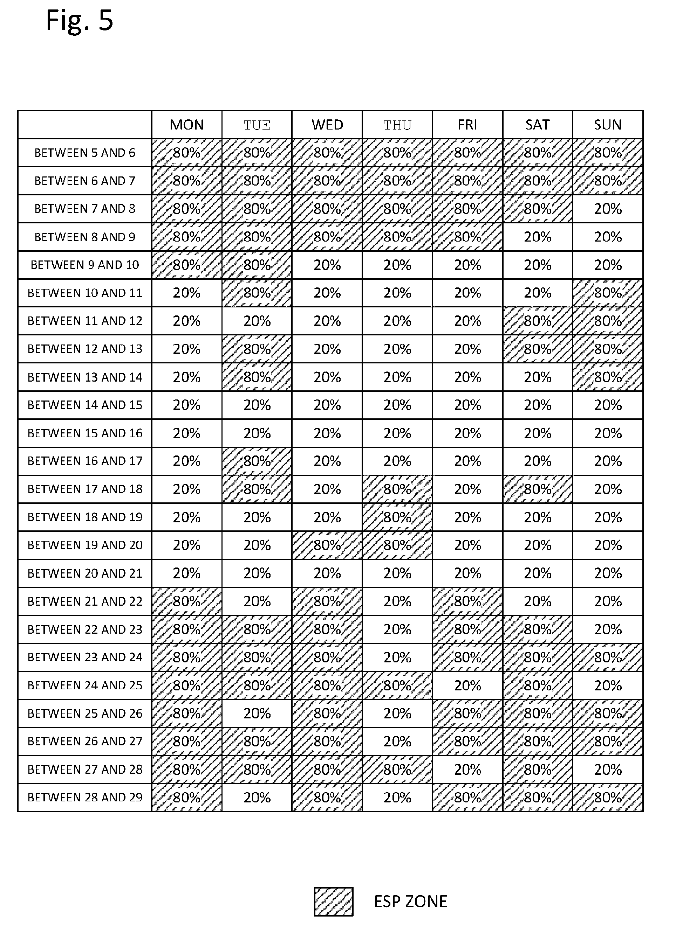

Figure 5 is a diagram showing an example of the ESP-zone desired rate. In this example, the ESP-zone desired rate is 80%, and 80% is shown in each of the advertisement slots corresponding to the ESP zones. In each of advertisement slots that do not correspond to the ESP zones, 20% (=100%-80%) is shown.

In the adjustment of step S104 (which may be called acquired GRP rate control), control is performed to satisfy the sum total of the acquired GRP rates of the ESP zones = the above ESP-zone desired rate and to satisfy a sum total of the acquired GRP rates of zones other than the ESP zones = 100% - the above ESP-zone desired rate.

For example, the evaluation apparatus 10 may perform the acquired GRP rate control based on Equations 2 and 3 below.

[Formula 1]

(Equation 2)

$$\text{Acquired GRP rate of ESP zone (after adjustment)} = \frac{\text{acquired GRP rate of ESP zone (before adjustment)} * \text{ESP zone desired rate}}{\text{sum total of acquired GRP rates of ESP zones (before adjustment)}}$$

(Equation 3)

$$\text{Acquired GRP rate outside ESP zones (after adjustment)} = \frac{\text{acquired GRP rate outside ESP zones (before adjustment)} * (100 - \text{ESP zone desired rate})}{\text{sum total of acquired GRP rates outside ESP zones (before adjustment)}}$$

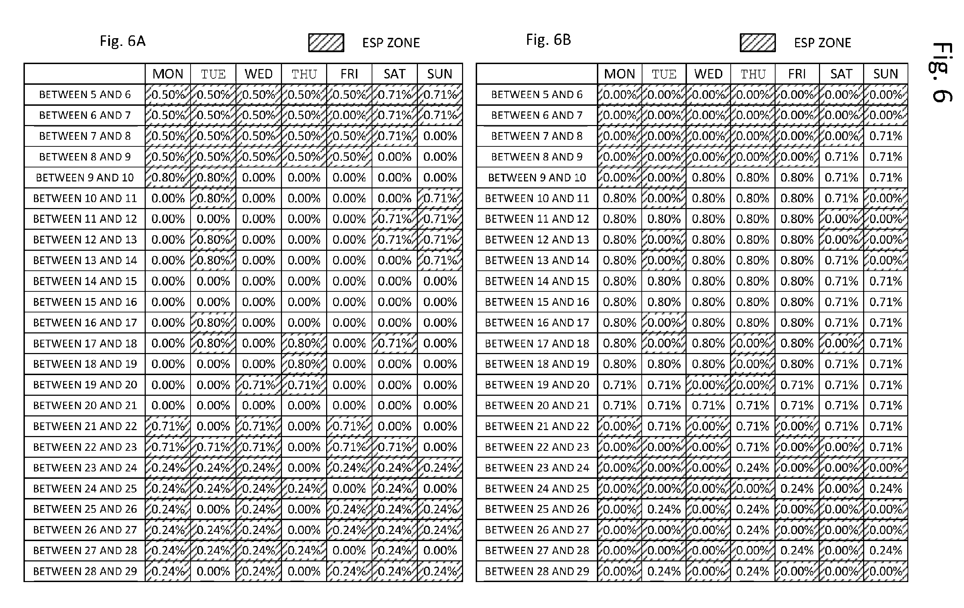

Figures 6A and 6B are diagrams showing examples of acquired GRP rates (before adjustment) of the ESP zones and outside the ESP zones, respectively. Figure 6A corresponds to a table in which, among the acquired GRP rates of the advertisement slots shown in the table on the right side of Figure 4, the values corresponding to the ESP zones are left as they are, and the values corresponding to the outside the ESP zones are set to 0. On the other hand, Figure 6B corresponds to a table in which, among the acquired GRP rates of the advertisement slots shown in the table on the right side of Figure 4, the values corresponding to the outside of the ESP zones are left as they are, and the values corresponding to the ESP zones are set to 0.

The sum total of the acquired GRP rates (before adjustment) of the ESP zones corresponds to a sum total of the acquired GRP rates of the advertisement slots in Figure 6A. In the case of Figure 6A, the sum total of the acquired GRP rates (before adjustment) of the ESP zones is determined as about 40.5%.

The sum total of the acquired GRP rates (before adjustment) outside the ESP zones corresponds to a sum total of the acquired GRP rates of the advertisement slots in Figure 6B. In the case of Figure 6B, the sum total of the acquired GRP rates (before adjustment) of the outside of the ESP zones is determined as about 59.5%.

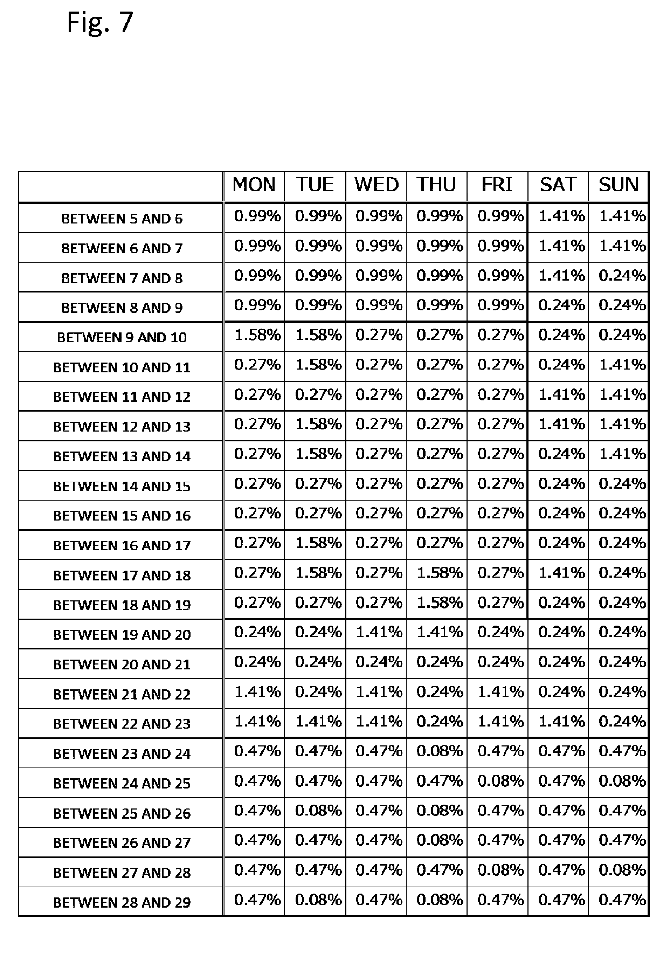

Figure 7 is a diagram showing an example of each acquired GRP rate after the acquired GRP rate control is applied. Figure 7 may be derived based on Figures 5 and 6.

For example, an acquired GRP rate (after adjustment) of the time slot between 5 o'clock and 6 o'clock on Monday corresponding to an ESP zone is determined as $0.50 * 80 / 40.5 \approx 0.99$ [%] based on Equation 2.

Further, an acquired GRP rate (after adjustment) of a time slot between 13 o'clock and 14 o'clock on Monday corresponding to the outside of the ESP zones is determined as $0.80 * 20 / 59.5 \approx 0.27$ [%] based on Equation 3.

At step S105, the evaluation apparatus 10 calculates effective target audience ratings of the advertisement slots based on the target content rates of the advertisement slots derived at step S101 and the acquired GRP rates by zone adjusted at step S104, and calculates a sum total of the effective target audience ratings (which may be called an effective target audience rating total, a total effective target audience rating, or the like). As the effective target audience rating total, for example, a value at the time of a given GRP value (for example 100 GRP) at which placement is assumed may be determined.

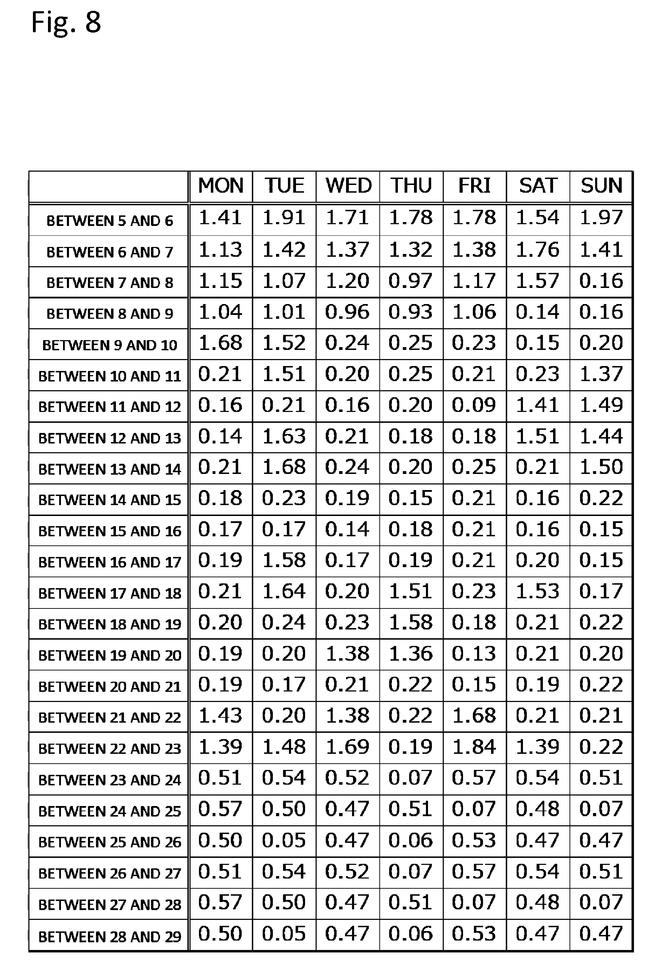

Figure 8 is a diagram showing an example of the effective target audience ratings. Figure 8 may be derived based on Figures 3 and 7. A value of each advertisement slot in Figure 8 corresponds to a value obtained by multiplying a value in the same slot in Figure 3 and a value in the same slot in Figure 7.

The effective target audience rating total is obtained by a sum total of the values of Figure 8, and is about 105.1 in the case of Figure 8.

At step S106, the evaluation apparatus 10 calculates an effective target audience rating cost. Here, the effective target audience rating cost may be determined by Equation 4 below:

(Equation 4)

Effective target audience rating cost = audience rating cost at the time of buying / effective target audience rating total

The audience rating cost at the time of buying in Equation 4 may correspond, for example, to a cost required to acquire an audience rating at the time of buying corresponding to a given unit (for example, 1%).

The effective target audience rating total is obtained by the sum total of the values of Figure 8, and is about 105.1 in the case of Figure 8. The effective target audience rating cost may mean a cost corresponding to a target audience rating of 1% (in other words, per target total audience rating (target rating point (TRP))).

Note that a normal target audience rating cost may be determined by Equation 5 below:

(Equation 5)

Target audience rating cost = audience rating cost at the time of buying / target content rate

According to Equation 5, it is meant that, when it is assumed that a cost to acquire a household audience rating of 1% is assumed to be 10,000 yen, and that the target content rate is 50%, the target audience rating cost is 20,000 yen.

The effective target audience rating cost in the case of not performing (omitting) the acquired GRP rate control of step S104 corresponds to a cost in spot transaction depending only on an existing placement pattern.

Therefore, by comparing the effective target audience rating cost in the case of performing the acquired GRP rate control of step S104 and the effective target audience rating cost in the case of not performing (omitting) the acquired GRP rate control of step S104, it is possible to measure a cost improvement effect based on the acquired GRP control.

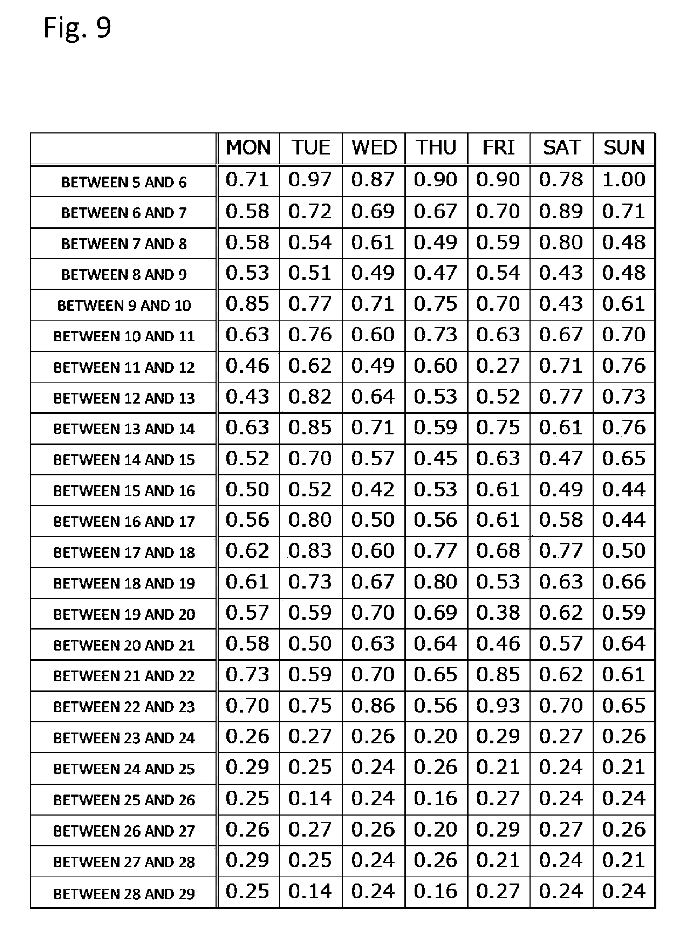

Figure 9 is a diagram showing an example of effective target audience ratings in the case of omitting the acquired GRP control. Figure 9 may be derived based on Figure 3 and the table of the right side of Figure 4. A value of each advertisement slot in Figure 9 corresponds to a value obtained by multiplying a value in the same slot in Figure 3 and a value in the same slot of the table on the right side of Figure 4.

The effective target audience rating total is obtained by a sum total of the values of Figure 9, and is about 90.5 in the case of Figure 9.

If it is assumed that audience rating cost at the time of buying is the same between the case of performing the acquired GRP rate control and the case of not performing the acquired GRP rate control, the effective target audience rating cost in the case of Figure 8 is 90.5 / 105.1 ≈ 86.2% in comparison with the effective target audience rating cost in the case of Figure 9.

In other words, in this case, cost reduction (efficiency) of about 13.8% can be realized by performing the acquired GRP rate control.

By performing steps S103 to S106 for each placement pattern and comparing effective target audience rating totals and effective target audience rating costs of placement patterns, the evaluation apparatus 10 may decide desirable advertisement placement (for example, budget allocation, advertisement placement patterns, ESP-zone desired rates and the like for broadcasting stations). The evaluation apparatus 10 may transmit control information for broadcasting a spot CM to the broadcast distribution apparatus 20 based on the decided advertisement placement.

According to the embodiment described above, it is possible to preferably decide highly efficient allocation of a spot CM for target.

<Others>

In the spot planning shown in the embodiment described above, an example of application to a television CM is shown. However, the spot planning is not limited thereto. The above embodiment of the present disclosure may be applied, for example, to a radio CM, a CM by Internet distribution and the like. One skilled in the art can replace and understand the description of the above embodiment as necessary. For example, in the case of being applied to a radio CM, an audience rating in the present disclosure may be replaced with a listening rate.

Here, "GRP" in the present disclosure may be replaced with any other index about a total audience rating.

Note that the present disclosure covers content in which "audience rating" is replaced with a particular index (or a degree of improvement, offset or the like of a particular index). The particular index may be an index for judging advertisement effects, an intermediate index for improving KPI (key performance indicators) of an advertiser, or the like, and, for example, a recognition rate, reach, ROAS (Return On Advertising Spend), ROI (Return on Investment) and the like may be included. A part of mentions of "audience rating" may be replaced with any of the above particular indexes.

For example, the target content rate in Equation 1 may be replaced with Equation 6 or Equation 7 below.

(Equation 6) Target content rate = particular index per target individual / particular index for the whole at the time of buying

(Equation 7) Target content rate = particular index per target individual / audience rating at the time of buying

Further, the present disclosure covers content in which "target" and "of the target" are deleted. When replacing with the particular index, which has been described above, is considered, for example, the content rate of the present disclosure may be replaced with Equation 8 below. By doing so, it can be expected to improve advertisement effects of an advertiser based on ESP zones irrespective of a target.

(Equation 8) Content rate = particular index / particular index at the time of buying

If replacement of terms stated here is applied, other terms may be appropriately replaced. For example, the acquired GRP rate may be called an acquired index rate or the like; the effective target audience rating may be called an effective target index, an effective index or the like; and the audience rating cost may be called an index cost or the like.

(Equipment configuration)

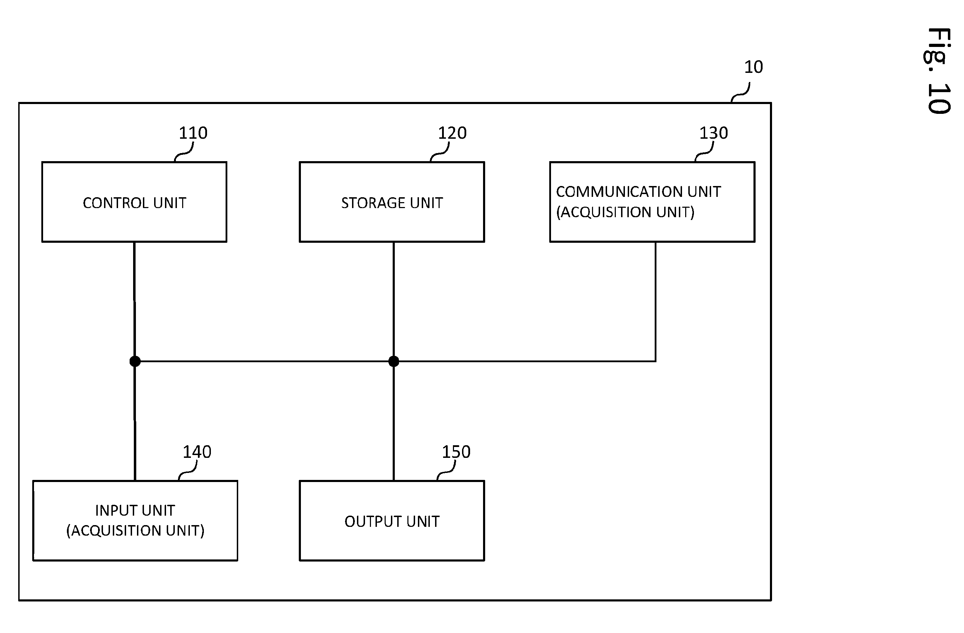

Figure 10 is a diagram showing an example of a functional configuration of an evaluation apparatus according to the embodiment. As shown in the example, the evaluation apparatus 10 has a control unit 110, a storage unit 120, a communication unit 130, an input unit 140 and an output unit 150. Note that functional blocks which are characteristic parts in the present embodiment are mainly shown in this example, and the evaluation apparatus 10 may have other functional blocks required for other processes. Further, a configuration is also possible in which a part of the functional blocks are not included.

The control unit 110 performs control of the evaluation apparatus 10. The control unit 110 can be configured with a controller, a control circuit or a control device that is described based on common recognition in the technical field of the present disclosure.

The storage unit 120 stores (holds) information used in the evaluation apparatus 10. The storage unit 120 can be configured with a memory, a storage, a storage device or the like that is described based on common recognition in the technical field of the present disclosure.

The communication unit 130 performs communication with other communication devices (equipment, servers and the like) via a network. The communication unit 13 may output received various information to the control unit 110.

The communication unit 130 can be configured with a transmitter/receiver, a transmission/reception circuit or a transmission/reception device that is described based on common recognition in the technical field of the present disclosure. Note that the communication unit 130 may be configured with a transmission unit and a reception unit.

The input unit 140 accepts an input by an operation from the user. Further, the input unit 140 may be connected to given equipment, a storage medium and the like to accept input of data. The input unit 140 may output an input result, for example, to the control unit 110.

The input unit 140 can be configured with an input device such as a keyboard, a mouse, buttons and the like, an input/output terminal and an input/output circuit or the like described based on common recognition in the technical field of the present disclosure. Further, the input unit 140 may be configured, being integrated with a display unit (for example, a touch panel).

The output unit 150 performs output of data, content and the like in a format perceptible to the user. For example, the output unit 150 may be configured, including the display unit to display an image, a sound output unit to output sound, and the like.

The display unit can be configured with a display device such as a display and a monitor that is described based on common recognition in the technical field of the present disclosure. The sound output unit can be configured with an output device such as a speaker that is described based on common recognition in the technical field of the present disclosure.

The output unit 150 can be configured, including an arithmetic unit, an arithmetic circuit, an arithmetic device, a player, an image/video/sound processing circuit, an image/video/sound processing device, an amplifier and the like described based on common recognition in the technical field of the present disclosure.

Note that the communication unit 130 or the input unit 140 may be called an acquisition unit. The acquisition unit may acquire information for identifying an effective area (an ESP zone) configured with an advertisement slot where the content rate of a particular target (the target content rate) is equal to or above a given threshold (the ESP zone threshold) (for example, information for deriving the target content rate).

The control unit 110 may perform a process based on the steps shown in Figure 2. For example, the control unit 110 may perform, in order that a sum total of total audience ratings (acquired gross rating point (GRP) rates) expected to be acquired by the advertisement slots of the effective areas with respect to all advertisement slots during a given period becomes a given value (the ESP-zone desired rate), adjustment of acquired GRP rates of all the advertisement slots during the given period.

The control unit 110 may perform the adjustment by multiplying the acquired GRP rates of the advertisement slots of the effective areas by the given value, and dividing the products by a sum total of the acquired GRP rates of all the advertisement slots of the effective areas (corresponding to Equation 2 described above).

The control unit 110 may perform the adjustment by multiplying the acquired GRP rates of the advertisement slots that do not correspond to the effective areas by a value obtained by subtracting the given value from 100, and dividing the products by a sum total of the acquired GRP rates of all the advertisement slots that do not correspond to the effective areas (corresponding to Equation 3 described above). Note that this "100" may correspond to the case of showing the ESP-zone desired rate in the unit of percent.

The control unit 110 may calculate the effective target audience rating of each advertisement slot based on the content rate of each advertisement slot and the acquired GRP rate of each advertisement slot for which the adjustment has been performed.

The control unit 110 may determine a degree of cost improvement by the adjustment based on the effective target audience rating of each advertisement slot. For example, the control unit 110 may judge (evaluate) the degree of cost improvement based on the acquired GRP control, by comparing an effective target audience rating cost in the case of performing the acquired GRP rate control and an effective target audience rating cost in the case of not performing the acquired GRP rate control.

Each of the broadcast distribution apparatus 20, the audience rating management apparatus 30 and the like may have a configuration similar to Figure 10. One skilled in the art can appropriately replace and understand the description related to the evaluation apparatus 10 in the description of Figure 10.

Some units will be illustratively described below. Note that a reference numeral of a device corresponding to each functional block of Figure 10 is shown by applying a first-digit numeral of a reference numeral indicating the device (for example, in the case of the broadcast distribution apparatus 20, "2" at the first digit of "20") to the first-digit numeral in Figure 8.

A communication unit 230 of the broadcast distribution apparatus 20 may receive control information for broadcasting a spot CM based on advertisement placement decided based on an effective target audience rating cost and the like, from the evaluation apparatus 10. A control unit 210 of the broadcast distribution apparatus 20 may decide a spot CM to be broadcast in a given time slot based on the above control information. The communication unit 230 of the broadcast distribution apparatus 20 may distribute (transmit) the spot CM.

A control unit 310 of the audience rating management apparatus 30 may derive information about an audience rating based on a television viewing log not shown. A communication unit 330 of the audience rating management apparatus 30 may transmit information for identifying effective areas (ESP zones) to the evaluation apparatus 10.

(Hardware configuration)

The block diagram used to describe the above embodiment shows blocks according to functions. Each of these functional blocks (components) is realized by an arbitrary combination of hardware and/or software. Further, means for realizing each functional block is not especially limited. Each functional block may be realized by one device that is physically combined or may be realized by two or more devices that are physically separated but are wiredly or wirelessly connected.

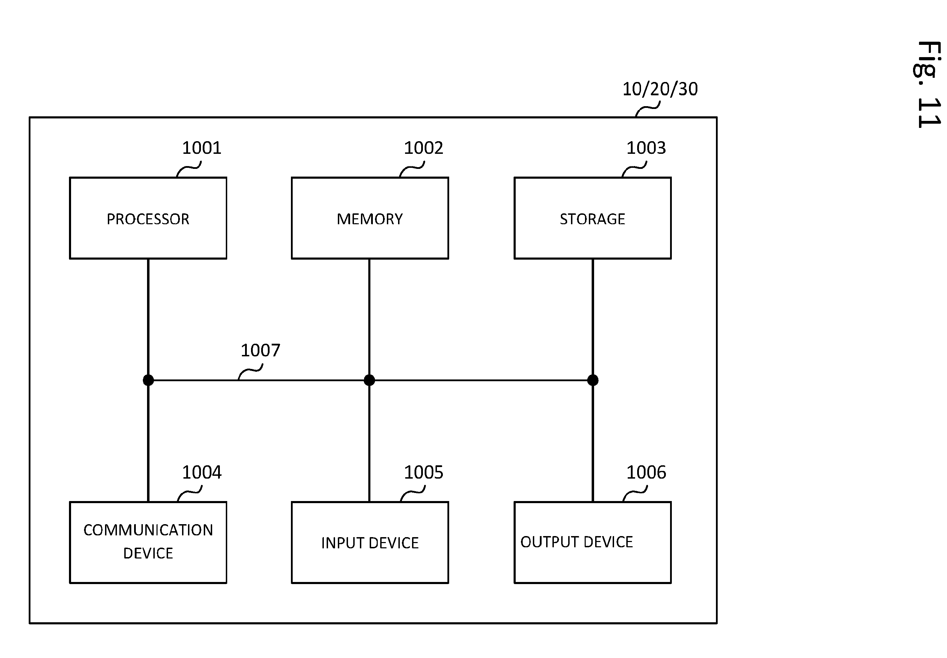

For example, an apparatus (the evaluation apparatus 10 or the like) in the embodiment of the present disclosure may function as a computer to perform the process of the spot planning evaluation method of the present disclosure. Figure 11 is a diagram showing an example of a hardware configuration of the evaluation apparatus and the like according to the embodiment. Physically, each of the evaluation apparatus 10, the broadcast distribution apparatus 20 and the like described above may be configured as a computer apparatus including a processor 1001, a memory 1002, a storage 1003, a communication device 1004, an input device 1005, an output device 1006, a bus 1007 and the like.

Note that, in the present disclosure, the terms "apparatus", "circuit", "device", "unit", "server" and the like can be replaced with one another. The hardware configuration of the evaluation apparatus 10, the broadcast distribution apparatus 20 and the like may be made so as to include, for each of the devices shown in Figure 11, one or more, or may be configured without including a part of the devices.

For example, though only one processor 1001 is shown, there may be a plurality of processors. Further, a process may be executed by one processor or may be executed by two or more processors at the same time, sequentially, or using other methods. Note that the processor 1001 may be implemented with one or more chips.

Each function of the evaluation apparatus 10, the broadcast distribution apparatus 20 and the like is realized by causing given software (a program) to be read on hardware such as the processor 1001 and the memory 1002, and thereby the processor 1001 performs an arithmetic operation to control communication by the communication device 1004, reading and/or writing of data on the memory 1002 and the storage 1003, and the like.

For example, the processor 1001 causes an operating system to operate and controls the whole computer. The processor 1001 may be configured with a CPU (central processing unit) that includes interfaces with peripheral devices, a control device, an arithmetic operation device, registers and the like. Note that each unit such as the control unit 110 described above may be realized by the processor 1001.

Further, the processor 1001 reads a program (a program code), a software module, data or the like from at least one of the storage 1003 and the communication device 1004 onto the memory 1002 and executes various kinds of processes according thereto. As the program, a program to cause a computer to execute at least a part of the operations described in the above embodiment is used. For example, the control unit 110 may be realized by a control program that is stored in the memory 1002 and operates on the processor 1001, and the other functional blocks may be similarly realized.

The memory 1002 is a computer-readable recording medium and may be configured, for example, with at least one of a ROM (read-only memory), an EPROM (erasable programmable ROM), an EEPROM (electrically EPROM), a RAM (random access memory) and other appropriate storage media. The memory 1002 may be called a register, a cache, a main memory (a main storage device) or the like. The memory 1002 can store a program (a program code), a software module or the like that can be executed to implement the method according to the embodiment.

The storage 1003 is a computer-readable recording medium and may be configured, for example, with at least one of a flexible disk, a floppy (registered trademark) disk, a magneto-optical disk (for example, a compact disc (a CD-ROM (compact disc ROM) and the like), a digital versatile disc and a Blu-ray (registered trademark) disk), a removable disk, a hard disk drive, a smart card, a flash memory device (for example, a card, a stick and a key drive), a magnetic stripe, a database, a server and other appropriate storage media. The storage 1003 may be called an auxiliary storage device. Note that the storage unit 120 described above may be realized by the memory 1002 and/or the storage 1003.

The communication device 1004 is hardware (a transmission/reception device) for performing communication between computers via at least one of a wired network and a wireless network and is also referred to, for example, as a network device, a network controller, a network card, a communication module or the like. The communication device 1004 may include a SIM card. Note that the communication unit 130 described above may be realized by the communication device 1004.

The input device 1005 is an input device (for example, a keyboard, a mouse and the like) to accept an input from outside. The output device 1006 is an output device (for example, a display, a speaker and the like) to perform output to the outside. Note that the input device 1005 and the output device 1006 may be integrally configured (for example, a touch panel). Note that the input unit 140 and the output unit 150 described above may be realized by the input device 1005 and the output device 1006, respectively.

Further, the devices such as the processor 1001 and the memory 1002 are connected via the bus 1008 for communicating information. The bus 1007 may be configured with a single bus or may be configured with different buses among the devices.

Further, the evaluation apparatus 10 and the like may be configured, including hardware such as a microprocessor, a DSP (digital signal processor), an ASIC (application specific integrated circuit), a PLD (programmable logic device) and an FPGA (field programmable gate array), and a part or all of each functional block may be realized by the hardware. For example, the processor 1001 may be at least one of these pieces of hardware.

(Modification)

Note that the terms described in the present disclosure and/or terms required to understand the present disclosure may be replaced with terms having the same or similar meanings.

The information, parameters and the like described in the present disclosure may be expressed using absolute values, expressed using relative values from given values, or expressed with corresponding different information. Further, names used for parameters and the like in the present disclosure are not limiting in any respect.

The information, signals and the like described in the present disclosure may be those expressed using any of various different techniques. For example, data, an instruction, a command, information, a signal, a bit, a symbol, a chip and the like that can be mentioned through the whole description above may be indicated by a voltage, a current, an electromagnetic wave, a magnetic field or a magnetic particle, a light field or a photon, or an arbitrary combination thereof.

Information, signals and the like may be inputted/outputted via a plurality of network nodes. The inputted/outputted information, signals and the like may be stored in a particular place (for example, a memory) or managed using tables. For the inputted/outputted information, signals and the like, overwriting, update or addition can be performed. The outputted information, signals and the like may be deleted. The inputted information, signals and the like may be transmitted to other apparatuses.

Further, notification of given information (for example, a notification of "being X") is not limited to an explicit notification but may be suggestively performed (for example, by not performing notification of the given information or by notifying different information).

Software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function and the like no matter whether it is called software, firmware, middleware, a microcode or a hardware description language or it is called by other names.

Further, software, instructions, information and the like may be transmitted/received via at least one of a transmission medium and a signal waveform. For example, when software is transmitted from a website, a server or other remote sources using at least one of wired technology (a coaxial cable, an optical fiber cable, a twisted pair, a DSL (digital subscriber line) and the like) and wireless technology (infrared rays, microwaves and the like), at least one of the wired technology and the wireless technology is included in the definition of a transmission medium.

The terms "system" and "network" used in the present disclosure can be interchangeably used.

The each of the aspects/embodiment described in the present disclosure may be used alone, or the aspects/embodiment may be used in combination or used by being switched at the time of implementation. Further, order of the process procedures, sequences, flowcharts and the like of the aspects/embodiment described in the present disclosure may be changed unless there is a contradiction. For example, the method described in the present disclosure presents various step elements in illustrative order and is not limited to the presented particular order.

The expression "based on" used in the present disclosure does not mean "based on only" unless otherwise stated. In other words, the expression "based on" means both of "based on only" and "at least based on".

Reference to elements using names accompanied by "first", "second" and the like which are used in the present disclosure does not generally limit the quantities or order of the elements. These names can be used in the present disclosure as a convenience method for distinguish two or more elements. Therefore, reference to a first and second elements does not mean that only the two elements can be adopted or that the first element must be prior to the second element in some form.

In the present disclosure, when "include", "including" and forms changed therefrom are used, these words are intended to be inclusive similarly to the term "comprising". Furthermore, the word "or" used in the present disclosure is intended not to be an exclusive OR.

In the present disclosure, for example, when an article is added by translation like "a", "an" and "the" in English, the present disclosure may include a case where nouns following these articles are in plural forms.

An invention according to the present disclosure has been described in detail above. It is apparent to one skilled in the art that the invention according to the present disclosure is not limited to the embodiment described in the present disclosure. The invention according to the present disclosure can be implemented as modified and changed aspects without departing from the spirit and scope of the invention determined based on description of Claims. Therefore, the description of the present disclosure is intended to give an illustrative explanation and does not give any restrictive meaning to the invention according to the present disclosure.

The present application is based on Japanese Patent Application No. 2019-114836 filed on June 20, 2019, the content of which is hereby incorporated in its entirety.

## Claims

**1.** A spot planning evaluation system comprising:

an acquisition unit configured to acquire information for identifying effective areas configured with advertisement slots with particular-target content rates equal to or larger than a given threshold; and

a control unit configured to perform, in order that a sum total of total audience ratings (acquired gross rating point (GRP) rates) expected to be acquired by the advertisement slots of the effective areas with respect to all advertisement slots during a given period becomes a given value, adjustment of acquired GRP rates of all the advertisement slots during the given period.

**2.** The spot planning evaluation system according to claim 1, wherein the control unit performs the adjustment by multiplying the acquired GRP rates of the advertisement slots of the effective areas by the given value, and dividing the products by a sum total of the acquired GRP rates of all the advertisement slots of the effective areas.

**3.** The spot planning evaluation system according to claim 1 or 2, wherein the control unit performs the adjustment by multiplying acquired GRP rates of advertisement slots that do not correspond to the effective areas by a value obtained by subtracting the given value from 100, and dividing the products by a sum total of the acquired GRP rates of all the advertisement slots that do not correspond to the effective areas.

**4.** The spot planning evaluation system according to any of claims 1 to 3, wherein the control unit calculates an effective target audience rating of each advertisement slot based on the content rate of each advertisement slot and the acquired GRP rate of each advertisement slot for which the adjustment has been performed.

**5.** The spot planning evaluation system according to claim 4, wherein the control unit determines a degree of cost improvement by the adjustment based on the effective target audience rating of each advertisement slot.

**6.** A spot planning evaluation apparatus comprising:

an acquisition unit configured to acquire information for identifying effective areas configured with advertisement slots with particular-target content rates equal to or larger than a given threshold; and
a control unit configured to perform, in order that a sum total of total audience ratings (acquired gross rating point (GRP) rates) expected to be acquired by the advertisement slots of the effective areas with respect to all advertisement slots during a given period becomes a given value, adjustment of acquired GRP rates of all the advertisement slots during the given period.

**7.** A program for causing a computer to execute:

a procedure for acquiring information for identifying effective areas configured with advertisement slots with particular-target content rates equal to or larger than a given threshold; and
a procedure for performing, in order that a sum total of total audience ratings (acquired gross rating point (GRP) rates) expected to be acquired by the advertisement slots of the effective areas with respect to all advertisement slots during a given period becomes a given value, adjustment of acquired gross GRP rates of all advertisement slots during the given period.

Fig. 1

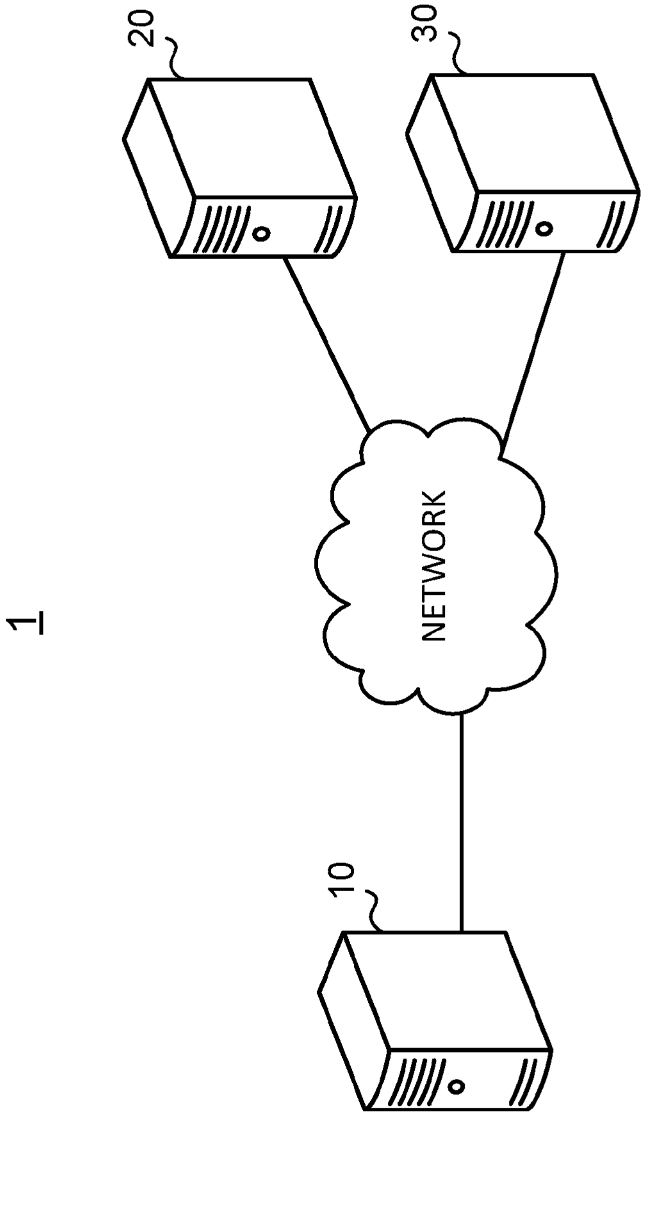

Fig. 2

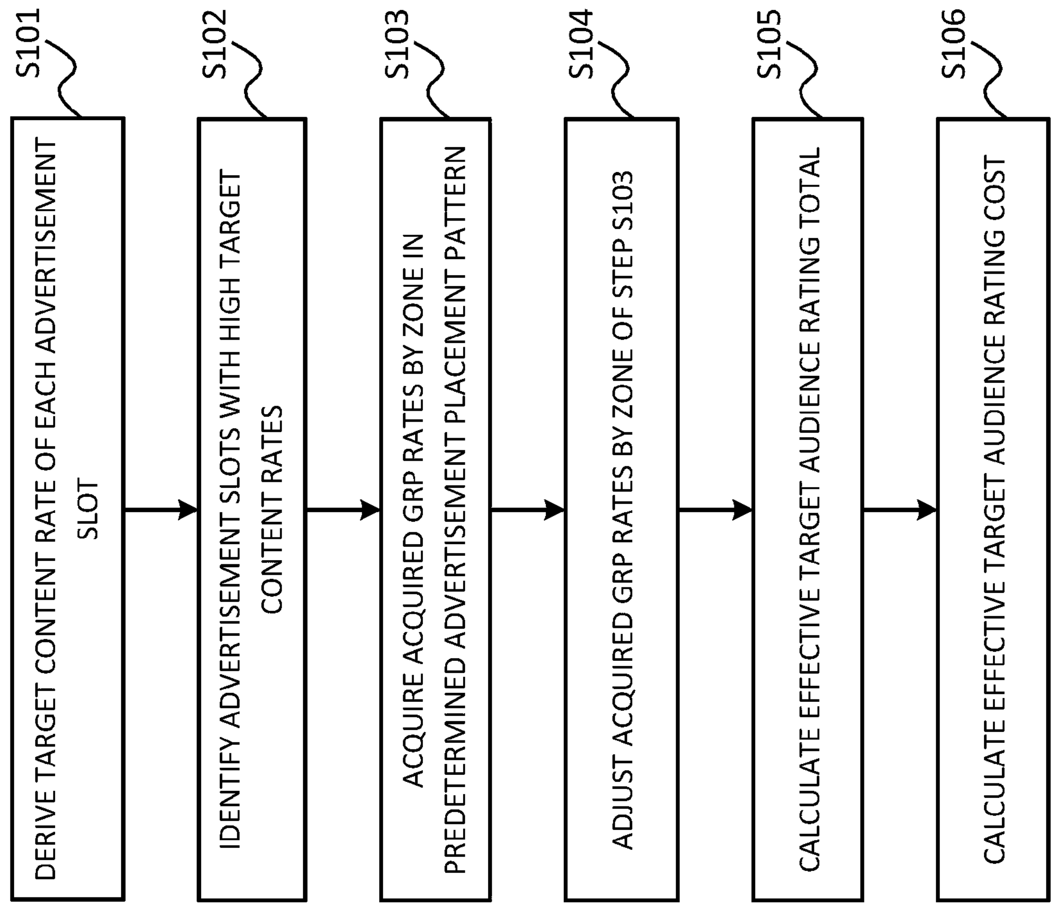
S101
DERIVE TARGET CONTENT RATE OF EACH ADVERTISEMENT SLOT
S102
IDENTIFY ADVERTISEMENT SLOTS WITH HIGH TARGET CONTENT RATES
S103
ACQUIRE ACQUIRED GRP RATES BY ZONE IN PREDETERMINED ADVERTISEMENT PLACEMENT PATTERN
S104
ADJUST ACQUIRED GRP RATES BY ZONE OF STEP S103
S105
CALCULATE EFFECTIVE TARGET AUDIENCE RATING TOTAL
S106
CALCULATE EFFECTIVE TARGET AUDIENCE RATING COST

Fig. 3

| | MON | TUE | WED | THU | FRI | SAT | SUN |
|---|---|---|---|---|---|---|---|
| BETWEEN 5 AND 6 | 142.9 | 193.3 | 173.3 | 180.0 | 180.0 | 109.1 | 140.0 |
| BETWEEN 6 AND 7 | 115.0 | 143.6 | 138.9 | 134.2 | 140.0 | 125.0 | 100.0 |
| BETWEEN 7 AND 8 | 116.7 | 108.9 | 121.6 | 98.1 | 118.5 | 111.6 | 66.7 |
| BETWEEN 8 AND 9 | 105.4 | 102.7 | 97.3 | 94.7 | 107.9 | 60.0 | 66.7 |
| BETWEEN 9 AND 10 | 106.7 | 96.4 | 88.2 | 93.5 | 87.1 | 60.5 | 85.0 |
| BETWEEN 10 AND 11 | 79.2 | 95.5 | 75.0 | 91.7 | 78.3 | 93.9 | 97.4 |
| BETWEEN 11 AND 12 | 57.9 | 77.8 | 60.9 | 75.0 | 33.3 | 100.0 | 105.7 |
| BETWEEN 12 AND 13 | 53.3 | 103.0 | 79.5 | 66.7 | 65.6 | 107.1 | 102.2 |
| BETWEEN 13 AND 14 | 79.3 | 106.5 | 89.2 | 73.3 | 93.8 | 85.7 | 106.1 |
| BETWEEN 14 AND 15 | 65.2 | 87.0 | 71.4 | 56.5 | 78.3 | 65.2 | 91.3 |
| BETWEEN 15 AND 16 | 61.9 | 65.0 | 52.0 | 66.7 | 76.2 | 68.4 | 61.1 |
| BETWEEN 16 AND 17 | 70.0 | 100.0 | 62.5 | 70.0 | 76.2 | 81.8 | 61.9 |
| BETWEEN 17 AND 18 | 77.8 | 103.7 | 75.0 | 95.8 | 84.6 | 108.3 | 69.4 |
| BETWEEN 18 AND 19 | 76.1 | 90.9 | 84.0 | 100.0 | 65.8 | 88.0 | 92.9 |
| BETWEEN 19 AND 20 | 80.3 | 82.5 | 97.9 | 96.2 | 53.7 | 86.3 | 82.8 |
| BETWEEN 20 AND 21 | 80.6 | 69.4 | 88.2 | 89.6 | 64.0 | 80.3 | 89.8 |
| BETWEEN 21 AND 22 | 101.6 | 82.3 | 98.0 | 90.4 | 119.5 | 87.1 | 85.9 |
| BETWEEN 22 AND 23 | 98.4 | 104.9 | 120.0 | 78.2 | 130.4 | 98.5 | 90.9 |
| BETWEEN 23 AND 24 | 109.4 | 114.0 | 109.8 | 85.7 | 120.6 | 114.8 | 107.8 |
| BETWEEN 24 AND 25 | 121.7 | 106.1 | 100.0 | 108.7 | 88.9 | 102.7 | 86.2 |
| BETWEEN 25 AND 26 | 106.3 | 60.0 | 100.0 | 69.2 | 113.3 | 100.0 | 100.0 |
| BETWEEN 26 AND 27 | 109.4 | 114.0 | 109.8 | 85.7 | 120.6 | 114.8 | 107.8 |
| BETWEEN 27 AND 28 | 121.7 | 106.1 | 100.0 | 108.7 | 88.9 | 102.7 | 86.2 |
| BETWEEN 28 AND 29 | 106.3 | 60.0 | 100.0 | 69.2 | 113.3 | 100.0 | 100.0 |

| | MON | TUE | WED | THU | FRI | SAT | SUN |
|---|---|---|---|---|---|---|---|
| BETWEEN 5 AND 6 | 142.9 | 193.3 | 173.3 | 180.0 | 180.0 | 109.1 | 140.0 |
| BETWEEN 6 AND 7 | 115.0 | 143.6 | 138.9 | 134.2 | 140.0 | 125.0 | 100.0 |
| BETWEEN 7 AND 8 | 116.7 | 108.9 | 121.6 | 98.1 | 118.5 | 111.6 | 66.7 |
| BETWEEN 8 AND 9 | 105.4 | 102.7 | 97.3 | 94.7 | 107.9 | 60.0 | 66.7 |
| BETWEEN 9 AND 10 | 106.7 | 96.4 | 88.2 | 93.5 | 87.1 | 60.5 | 85.0 |
| BETWEEN 10 AND 11 | 79.2 | 95.5 | 75.0 | 91.7 | 78.3 | 93.9 | 97.4 |
| BETWEEN 11 AND 12 | 57.9 | 77.8 | 60.9 | 75.0 | 33.3 | 100.0 | 105.7 |
| BETWEEN 12 AND 13 | 53.3 | 103.0 | 79.5 | 66.7 | 65.6 | 107.1 | 102.2 |
| BETWEEN 13 AND 14 | 79.3 | 106.5 | 89.2 | 73.3 | 93.8 | 85.7 | 106.1 |
| BETWEEN 14 AND 15 | 65.2 | 87.0 | 71.4 | 56.5 | 78.3 | 65.2 | 91.3 |
| BETWEEN 15 AND 16 | 61.9 | 65.0 | 52.0 | 66.7 | 76.2 | 68.4 | 61.1 |
| BETWEEN 16 AND 17 | 70.0 | 100.0 | 62.5 | 70.0 | 76.2 | 81.8 | 61.9 |
| BETWEEN 17 AND 18 | 77.8 | 103.7 | 75.0 | 95.8 | 84.6 | 108.3 | 69.4 |
| BETWEEN 18 AND 19 | 76.1 | 90.9 | 84.0 | 100.0 | 65.8 | 88.0 | 92.9 |
| BETWEEN 19 AND 20 | 80.3 | 82.5 | 97.9 | 96.2 | 53.7 | 86.3 | 82.8 |
| BETWEEN 20 AND 21 | 80.6 | 69.4 | 88.2 | 89.6 | 64.0 | 80.3 | 89.8 |
| BETWEEN 21 AND 22 | 101.6 | 82.3 | 98.0 | 90.4 | 119.5 | 87.1 | 85.9 |
| BETWEEN 22 AND 23 | 98.4 | 104.9 | 120.0 | 78.2 | 130.4 | 98.5 | 90.9 |
| BETWEEN 23 AND 24 | 109.4 | 114.0 | 109.8 | 85.7 | 120.6 | 114.8 | 107.8 |
| BETWEEN 24 AND 25 | 121.7 | 106.1 | 100.0 | 108.7 | 88.9 | 102.7 | 86.2 |
| BETWEEN 25 AND 26 | 106.3 | 60.0 | 100.0 | 69.2 | 113.3 | 100.0 | 100.0 |
| BETWEEN 26 AND 27 | 109.4 | 114.0 | 109.8 | 85.7 | 120.6 | 114.8 | 107.8 |
| BETWEEN 27 AND 28 | 121.7 | 106.1 | 100.0 | 108.7 | 88.9 | 102.7 | 86.2 |
| BETWEEN 28 AND 29 | 106.3 | 60.0 | 100.0 | 69.2 | 113.3 | 100.0 | 100.0 |

ESP ZONE

Fig. 4

| | MON | TUE | WED | THU | FRI | SAT | SUN |
|---|---|---|---|---|---|---|---|
| BETWEEN 5 AND 6 | 10% | | | | | 20% | |
| BETWEEN 6 AND 7 | | | | | | | |
| BETWEEN 7 AND 8 | | | | | | | |
| BETWEEN 8 AND 9 | | | | | | | |
| BETWEEN 9 AND 10 | 40% | | | | | | |
| BETWEEN 10 AND 11 | | | | | | | |
| BETWEEN 11 AND 12 | | | | | | | |
| BETWEEN 12 AND 13 | | | | | | | |
| BETWEEN 13 AND 14 | | | | | | | |
| BETWEEN 14 AND 15 | | | | | | | |
| BETWEEN 15 AND 16 | | | | | | | |
| BETWEEN 16 AND 17 | | | | | | | |
| BETWEEN 17 AND 18 | | | | | | | |
| BETWEEN 18 AND 19 | | | | | | | |
| BETWEEN 19 AND 20 | 20% | | | | | | |
| BETWEEN 20 AND 21 | | | | | | | |
| BETWEEN 21 AND 22 | | | | | | | |
| BETWEEN 22 AND 23 | | | | | | | |
| BETWEEN 23 AND 24 | 10% | | | | | | |
| BETWEEN 24 AND 25 | | | | | | | |
| BETWEEN 25 AND 26 | | | | | | | |
| BETWEEN 26 AND 27 | | | | | | | |
| BETWEEN 27 AND 28 | | | | | | | |
| BETWEEN 28 AND 29 | | | | | | | |

| | MON | TUE | WED | THU | FRI | SAT | SUN |
|---|---|---|---|---|---|---|---|
| BETWEEN 5 AND 6 | 0.50% | 0.50% | 0.50% | 0.50% | 0.50% | 0.71% | 0.71% |
| BETWEEN 6 AND 7 | 0.50% | 0.50% | 0.50% | 0.50% | 0.50% | 0.71% | 0.71% |
| BETWEEN 7 AND 8 | 0.50% | 0.50% | 0.50% | 0.50% | 0.50% | 0.71% | 0.71% |
| BETWEEN 8 AND 9 | 0.50% | 0.50% | 0.50% | 0.50% | 0.50% | 0.71% | 0.71% |
| BETWEEN 9 AND 10 | 0.80% | 0.80% | 0.80% | 0.80% | 0.80% | 0.71% | 0.71% |
| BETWEEN 10 AND 11 | 0.80% | 0.80% | 0.80% | 0.80% | 0.80% | 0.71% | 0.71% |
| BETWEEN 11 AND 12 | 0.80% | 0.80% | 0.80% | 0.80% | 0.80% | 0.71% | 0.71% |
| BETWEEN 12 AND 13 | 0.80% | 0.80% | 0.80% | 0.80% | 0.80% | 0.71% | 0.71% |
| BETWEEN 13 AND 14 | 0.80% | 0.80% | 0.80% | 0.80% | 0.80% | 0.71% | 0.71% |
| BETWEEN 14 AND 15 | 0.80% | 0.80% | 0.80% | 0.80% | 0.80% | 0.71% | 0.71% |
| BETWEEN 15 AND 16 | 0.80% | 0.80% | 0.80% | 0.80% | 0.80% | 0.71% | 0.71% |
| BETWEEN 16 AND 17 | 0.80% | 0.80% | 0.80% | 0.80% | 0.80% | 0.71% | 0.71% |
| BETWEEN 17 AND 18 | 0.80% | 0.80% | 0.80% | 0.80% | 0.80% | 0.71% | 0.71% |
| BETWEEN 18 AND 19 | 0.80% | 0.80% | 0.80% | 0.80% | 0.80% | 0.71% | 0.71% |
| BETWEEN 19 AND 20 | 0.71% | 0.71% | 0.71% | 0.71% | 0.71% | 0.71% | 0.71% |
| BETWEEN 20 AND 21 | 0.71% | 0.71% | 0.71% | 0.71% | 0.71% | 0.71% | 0.71% |
| BETWEEN 21 AND 22 | 0.71% | 0.71% | 0.71% | 0.71% | 0.71% | 0.71% | 0.71% |
| BETWEEN 22 AND 23 | 0.71% | 0.71% | 0.71% | 0.71% | 0.71% | 0.71% | 0.71% |
| BETWEEN 23 AND 24 | 0.24% | 0.24% | 0.24% | 0.24% | 0.24% | 0.24% | 0.24% |
| BETWEEN 24 AND 25 | 0.24% | 0.24% | 0.24% | 0.24% | 0.24% | 0.24% | 0.24% |
| BETWEEN 25 AND 26 | 0.24% | 0.24% | 0.24% | 0.24% | 0.24% | 0.24% | 0.24% |
| BETWEEN 26 AND 27 | 0.24% | 0.24% | 0.24% | 0.24% | 0.24% | 0.24% | 0.24% |
| BETWEEN 27 AND 28 | 0.24% | 0.24% | 0.24% | 0.24% | 0.24% | 0.24% | 0.24% |
| BETWEEN 28 AND 29 | 0.24% | 0.24% | 0.24% | 0.24% | 0.24% | 0.24% | 0.24% |

# Fig. 5

| | MON | TUE | WED | THU | FRI | SAT | SUN |
|---|---|---|---|---|---|---|---|
| BETWEEN 5 AND 6 | 80% | 80% | 80% | 80% | 80% | 80% | 80% |
| BETWEEN 6 AND 7 | 80% | 80% | 80% | 80% | 80% | 80% | 80% |
| BETWEEN 7 AND 8 | 80% | 80% | 80% | 80% | 80% | 80% | 20% |
| BETWEEN 8 AND 9 | 80% | 80% | 80% | 80% | 80% | 20% | 20% |
| BETWEEN 9 AND 10 | 80% | 80% | 20% | 20% | 20% | 20% | 20% |
| BETWEEN 10 AND 11 | 20% | 80% | 20% | 20% | 20% | 20% | 80% |
| BETWEEN 11 AND 12 | 20% | 20% | 20% | 20% | 20% | 80% | 80% |
| BETWEEN 12 AND 13 | 20% | 80% | 20% | 20% | 20% | 80% | 80% |
| BETWEEN 13 AND 14 | 20% | 80% | 20% | 20% | 20% | 20% | 80% |
| BETWEEN 14 AND 15 | 20% | 20% | 20% | 20% | 20% | 20% | 20% |
| BETWEEN 15 AND 16 | 20% | 20% | 20% | 20% | 20% | 20% | 20% |
| BETWEEN 16 AND 17 | 20% | 80% | 20% | 20% | 20% | 20% | 20% |
| BETWEEN 17 AND 18 | 20% | 80% | 20% | 80% | 20% | 80% | 20% |
| BETWEEN 18 AND 19 | 20% | 20% | 20% | 80% | 20% | 20% | 20% |
| BETWEEN 19 AND 20 | 20% | 20% | 80% | 80% | 20% | 20% | 20% |
| BETWEEN 20 AND 21 | 20% | 20% | 20% | 20% | 20% | 20% | 20% |
| BETWEEN 21 AND 22 | 80% | 20% | 80% | 20% | 80% | 20% | 20% |
| BETWEEN 22 AND 23 | 80% | 80% | 80% | 20% | 80% | 80% | 20% |
| BETWEEN 23 AND 24 | 80% | 80% | 80% | 20% | 80% | 80% | 80% |
| BETWEEN 24 AND 25 | 80% | 80% | 80% | 80% | 20% | 80% | 20% |
| BETWEEN 25 AND 26 | 80% | 20% | 80% | 20% | 80% | 80% | 80% |
| BETWEEN 26 AND 27 | 80% | 80% | 80% | 20% | 80% | 80% | 80% |
| BETWEEN 27 AND 28 | 80% | 80% | 80% | 80% | 20% | 80% | 20% |
| BETWEEN 28 AND 29 | 80% | 20% | 80% | 20% | 80% | 80% | 80% |

ESP ZONE

# Fig. 6

Fig. 6A

ESP ZONE

| | MON | TUE | WED | THU | FRI | SAT | SUN |
|---|---|---|---|---|---|---|---|
| BETWEEN 5 AND 6 | 0.50% | 0.50% | 0.50% | 0.50% | 0.50% | 0.71% | 0.71% |
| BETWEEN 6 AND 7 | 0.50% | 0.50% | 0.50% | 0.50% | 0.00% | 0.71% | 0.71% |
| BETWEEN 7 AND 8 | 0.50% | 0.50% | 0.50% | 0.50% | 0.50% | 0.71% | 0.00% |
| BETWEEN 8 AND 9 | 0.50% | 0.50% | 0.50% | 0.50% | 0.50% | 0.00% | 0.00% |
| BETWEEN 9 AND 10 | 0.80% | 0.80% | 0.00% | 0.00% | 0.00% | 0.00% | 0.00% |
| BETWEEN 10 AND 11 | 0.00% | 0.80% | 0.00% | 0.00% | 0.00% | 0.00% | 0.71% |
| BETWEEN 11 AND 12 | 0.00% | 0.00% | 0.00% | 0.00% | 0.00% | 0.71% | 0.71% |
| BETWEEN 12 AND 13 | 0.00% | 0.80% | 0.00% | 0.00% | 0.00% | 0.71% | 0.71% |
| BETWEEN 13 AND 14 | 0.00% | 0.80% | 0.00% | 0.00% | 0.00% | 0.00% | 0.71% |
| BETWEEN 14 AND 15 | 0.00% | 0.00% | 0.00% | 0.00% | 0.00% | 0.00% | 0.00% |
| BETWEEN 15 AND 16 | 0.00% | 0.00% | 0.00% | 0.00% | 0.00% | 0.00% | 0.00% |
| BETWEEN 16 AND 17 | 0.00% | 0.80% | 0.00% | 0.00% | 0.00% | 0.00% | 0.00% |
| BETWEEN 17 AND 18 | 0.00% | 0.80% | 0.00% | 0.80% | 0.00% | 0.71% | 0.00% |
| BETWEEN 18 AND 19 | 0.00% | 0.00% | 0.00% | 0.80% | 0.00% | 0.00% | 0.00% |
| BETWEEN 19 AND 20 | 0.00% | 0.00% | 0.71% | 0.71% | 0.00% | 0.00% | 0.00% |
| BETWEEN 20 AND 21 | 0.00% | 0.00% | 0.00% | 0.00% | 0.00% | 0.00% | 0.00% |
| BETWEEN 21 AND 22 | 0.71% | 0.00% | 0.71% | 0.00% | 0.71% | 0.00% | 0.00% |
| BETWEEN 22 AND 23 | 0.71% | 0.71% | 0.71% | 0.00% | 0.71% | 0.71% | 0.00% |
| BETWEEN 23 AND 24 | 0.24% | 0.24% | 0.24% | 0.00% | 0.24% | 0.24% | 0.24% |
| BETWEEN 24 AND 25 | 0.24% | 0.24% | 0.24% | 0.24% | 0.00% | 0.24% | 0.00% |
| BETWEEN 25 AND 26 | 0.24% | 0.00% | 0.24% | 0.00% | 0.24% | 0.24% | 0.24% |
| BETWEEN 26 AND 27 | 0.24% | 0.24% | 0.24% | 0.00% | 0.24% | 0.24% | 0.24% |
| BETWEEN 27 AND 28 | 0.24% | 0.24% | 0.24% | 0.24% | 0.00% | 0.24% | 0.00% |
| BETWEEN 28 AND 29 | 0.24% | 0.00% | 0.24% | 0.00% | 0.24% | 0.24% | 0.24% |

Fig. 6B

ESP ZONE

| | MON | TUE | WED | THU | FRI | SAT | SUN |
|---|---|---|---|---|---|---|---|
| BETWEEN 5 AND 6 | 0.00% | 0.00% | 0.00% | 0.00% | 0.00% | 0.00% | 0.00% |
| BETWEEN 6 AND 7 | 0.00% | 0.00% | 0.00% | 0.00% | 0.00% | 0.00% | 0.00% |
| BETWEEN 7 AND 8 | 0.00% | 0.00% | 0.00% | 0.00% | 0.00% | 0.00% | 0.71% |
| BETWEEN 8 AND 9 | 0.00% | 0.00% | 0.00% | 0.00% | 0.00% | 0.71% | 0.71% |
| BETWEEN 9 AND 10 | 0.00% | 0.00% | 0.80% | 0.80% | 0.80% | 0.71% | 0.71% |
| BETWEEN 10 AND 11 | 0.80% | 0.00% | 0.80% | 0.80% | 0.80% | 0.71% | 0.00% |
| BETWEEN 11 AND 12 | 0.80% | 0.80% | 0.80% | 0.80% | 0.80% | 0.00% | 0.00% |
| BETWEEN 12 AND 13 | 0.80% | 0.00% | 0.80% | 0.80% | 0.80% | 0.00% | 0.00% |
| BETWEEN 13 AND 14 | 0.80% | 0.00% | 0.80% | 0.80% | 0.80% | 0.71% | 0.00% |
| BETWEEN 14 AND 15 | 0.80% | 0.80% | 0.80% | 0.80% | 0.80% | 0.71% | 0.71% |
| BETWEEN 15 AND 16 | 0.80% | 0.80% | 0.80% | 0.80% | 0.80% | 0.71% | 0.71% |
| BETWEEN 16 AND 17 | 0.80% | 0.00% | 0.80% | 0.80% | 0.80% | 0.71% | 0.71% |
| BETWEEN 17 AND 18 | 0.80% | 0.00% | 0.80% | 0.00% | 0.80% | 0.00% | 0.71% |
| BETWEEN 18 AND 19 | 0.80% | 0.80% | 0.80% | 0.00% | 0.80% | 0.71% | 0.71% |
| BETWEEN 19 AND 20 | 0.71% | 0.71% | 0.00% | 0.00% | 0.71% | 0.71% | 0.71% |
| BETWEEN 20 AND 21 | 0.71% | 0.71% | 0.71% | 0.71% | 0.71% | 0.71% | 0.71% |
| BETWEEN 21 AND 22 | 0.00% | 0.71% | 0.00% | 0.71% | 0.00% | 0.71% | 0.71% |
| BETWEEN 22 AND 23 | 0.00% | 0.00% | 0.00% | 0.71% | 0.00% | 0.00% | 0.71% |
| BETWEEN 23 AND 24 | 0.00% | 0.00% | 0.00% | 0.24% | 0.00% | 0.00% | 0.00% |
| BETWEEN 24 AND 25 | 0.00% | 0.00% | 0.00% | 0.00% | 0.24% | 0.00% | 0.24% |
| BETWEEN 25 AND 26 | 0.00% | 0.24% | 0.00% | 0.24% | 0.00% | 0.00% | 0.00% |
| BETWEEN 26 AND 27 | 0.00% | 0.00% | 0.00% | 0.24% | 0.00% | 0.00% | 0.00% |
| BETWEEN 27 AND 28 | 0.00% | 0.00% | 0.00% | 0.00% | 0.24% | 0.00% | 0.24% |
| BETWEEN 28 AND 29 | 0.00% | 0.24% | 0.00% | 0.24% | 0.00% | 0.00% | 0.00% |

Fig. 7

| | MON | TUE | WED | THU | FRI | SAT | SUN |
|---|---|---|---|---|---|---|---|
| BETWEEN 5 AND 6 | 0.99% | 0.99% | 0.99% | 0.99% | 0.99% | 1.41% | 1.41% |
| BETWEEN 6 AND 7 | 0.99% | 0.99% | 0.99% | 0.99% | 0.99% | 1.41% | 1.41% |
| BETWEEN 7 AND 8 | 0.99% | 0.99% | 0.99% | 0.99% | 0.99% | 1.41% | 0.24% |
| BETWEEN 8 AND 9 | 0.99% | 0.99% | 0.99% | 0.99% | 0.99% | 0.24% | 0.24% |
| BETWEEN 9 AND 10 | 1.58% | 1.58% | 0.27% | 0.27% | 0.27% | 0.24% | 0.24% |
| BETWEEN 10 AND 11 | 0.27% | 1.58% | 0.27% | 0.27% | 0.27% | 0.24% | 1.41% |
| BETWEEN 11 AND 12 | 0.27% | 0.27% | 0.27% | 0.27% | 0.27% | 1.41% | 1.41% |
| BETWEEN 12 AND 13 | 0.27% | 1.58% | 0.27% | 0.27% | 0.27% | 1.41% | 1.41% |
| BETWEEN 13 AND 14 | 0.27% | 1.58% | 0.27% | 0.27% | 0.27% | 0.24% | 1.41% |
| BETWEEN 14 AND 15 | 0.27% | 0.27% | 0.27% | 0.27% | 0.27% | 0.24% | 0.24% |
| BETWEEN 15 AND 16 | 0.27% | 0.27% | 0.27% | 0.27% | 0.27% | 0.24% | 0.24% |
| BETWEEN 16 AND 17 | 0.27% | 1.58% | 0.27% | 0.27% | 0.27% | 0.24% | 0.24% |
| BETWEEN 17 AND 18 | 0.27% | 1.58% | 0.27% | 1.58% | 0.27% | 1.41% | 0.24% |
| BETWEEN 18 AND 19 | 0.27% | 0.27% | 0.27% | 1.58% | 0.27% | 0.24% | 0.24% |
| BETWEEN 19 AND 20 | 0.24% | 0.24% | 1.41% | 1.41% | 0.24% | 0.24% | 0.24% |
| BETWEEN 20 AND 21 | 0.24% | 0.24% | 0.24% | 0.24% | 0.24% | 0.24% | 0.24% |
| BETWEEN 21 AND 22 | 1.41% | 0.24% | 1.41% | 0.24% | 1.41% | 0.24% | 0.24% |
| BETWEEN 22 AND 23 | 1.41% | 1.41% | 1.41% | 0.24% | 1.41% | 1.41% | 0.24% |
| BETWEEN 23 AND 24 | 0.47% | 0.47% | 0.47% | 0.08% | 0.47% | 0.47% | 0.47% |
| BETWEEN 24 AND 25 | 0.47% | 0.47% | 0.47% | 0.47% | 0.08% | 0.47% | 0.08% |
| BETWEEN 25 AND 26 | 0.47% | 0.08% | 0.47% | 0.08% | 0.47% | 0.47% | 0.47% |
| BETWEEN 26 AND 27 | 0.47% | 0.47% | 0.47% | 0.08% | 0.47% | 0.47% | 0.47% |
| BETWEEN 27 AND 28 | 0.47% | 0.47% | 0.47% | 0.47% | 0.08% | 0.47% | 0.08% |
| BETWEEN 28 AND 29 | 0.47% | 0.08% | 0.47% | 0.08% | 0.47% | 0.47% | 0.47% |

Fig. 8

| | MON | TUE | WED | THU | FRI | SAT | SUN |
|---|---|---|---|---|---|---|---|
| BETWEEN 5 AND 6 | 1.41 | 1.91 | 1.71 | 1.78 | 1.78 | 1.54 | 1.97 |
| BETWEEN 6 AND 7 | 1.13 | 1.42 | 1.37 | 1.32 | 1.38 | 1.76 | 1.41 |
| BETWEEN 7 AND 8 | 1.15 | 1.07 | 1.20 | 0.97 | 1.17 | 1.57 | 0.16 |
| BETWEEN 8 AND 9 | 1.04 | 1.01 | 0.96 | 0.93 | 1.06 | 0.14 | 0.16 |
| BETWEEN 9 AND 10 | 1.68 | 1.52 | 0.24 | 0.25 | 0.23 | 0.15 | 0.20 |
| BETWEEN 10 AND 11 | 0.21 | 1.51 | 0.20 | 0.25 | 0.21 | 0.23 | 1.37 |
| BETWEEN 11 AND 12 | 0.16 | 0.21 | 0.16 | 0.20 | 0.09 | 1.41 | 1.49 |
| BETWEEN 12 AND 13 | 0.14 | 1.63 | 0.21 | 0.18 | 0.18 | 1.51 | 1.44 |
| BETWEEN 13 AND 14 | 0.21 | 1.68 | 0.24 | 0.20 | 0.25 | 0.21 | 1.50 |
| BETWEEN 14 AND 15 | 0.18 | 0.23 | 0.19 | 0.15 | 0.21 | 0.16 | 0.22 |
| BETWEEN 15 AND 16 | 0.17 | 0.17 | 0.14 | 0.18 | 0.21 | 0.16 | 0.15 |
| BETWEEN 16 AND 17 | 0.19 | 1.58 | 0.17 | 0.19 | 0.21 | 0.20 | 0.15 |
| BETWEEN 17 AND 18 | 0.21 | 1.64 | 0.20 | 1.51 | 0.23 | 1.53 | 0.17 |
| BETWEEN 18 AND 19 | 0.20 | 0.24 | 0.23 | 1.58 | 0.18 | 0.21 | 0.22 |
| BETWEEN 19 AND 20 | 0.19 | 0.20 | 1.38 | 1.36 | 0.13 | 0.21 | 0.20 |
| BETWEEN 20 AND 21 | 0.19 | 0.17 | 0.21 | 0.22 | 0.15 | 0.19 | 0.22 |
| BETWEEN 21 AND 22 | 1.43 | 0.20 | 1.38 | 0.22 | 1.68 | 0.21 | 0.21 |
| BETWEEN 22 AND 23 | 1.39 | 1.48 | 1.69 | 0.19 | 1.84 | 1.39 | 0.22 |
| BETWEEN 23 AND 24 | 0.51 | 0.54 | 0.52 | 0.07 | 0.57 | 0.54 | 0.51 |
| BETWEEN 24 AND 25 | 0.57 | 0.50 | 0.47 | 0.51 | 0.07 | 0.48 | 0.07 |
| BETWEEN 25 AND 26 | 0.50 | 0.05 | 0.47 | 0.06 | 0.53 | 0.47 | 0.47 |
| BETWEEN 26 AND 27 | 0.51 | 0.54 | 0.52 | 0.07 | 0.57 | 0.54 | 0.51 |
| BETWEEN 27 AND 28 | 0.57 | 0.50 | 0.47 | 0.51 | 0.07 | 0.48 | 0.07 |
| BETWEEN 28 AND 29 | 0.50 | 0.05 | 0.47 | 0.06 | 0.53 | 0.47 | 0.47 |

Fig. 9

| | MON | TUE | WED | THU | FRI | SAT | SUN |
|---|---|---|---|---|---|---|---|
| BETWEEN 5 AND 6 | 0.71 | 0.97 | 0.87 | 0.90 | 0.90 | 0.78 | 1.00 |
| BETWEEN 6 AND 7 | 0.58 | 0.72 | 0.69 | 0.67 | 0.70 | 0.89 | 0.71 |
| BETWEEN 7 AND 8 | 0.58 | 0.54 | 0.61 | 0.49 | 0.59 | 0.80 | 0.48 |
| BETWEEN 8 AND 9 | 0.53 | 0.51 | 0.49 | 0.47 | 0.54 | 0.43 | 0.48 |
| BETWEEN 9 AND 10 | 0.85 | 0.77 | 0.71 | 0.75 | 0.70 | 0.43 | 0.61 |
| BETWEEN 10 AND 11 | 0.63 | 0.76 | 0.60 | 0.73 | 0.63 | 0.67 | 0.70 |
| BETWEEN 11 AND 12 | 0.46 | 0.62 | 0.49 | 0.60 | 0.27 | 0.71 | 0.76 |
| BETWEEN 12 AND 13 | 0.43 | 0.82 | 0.64 | 0.53 | 0.52 | 0.77 | 0.73 |
| BETWEEN 13 AND 14 | 0.63 | 0.85 | 0.71 | 0.59 | 0.75 | 0.61 | 0.76 |
| BETWEEN 14 AND 15 | 0.52 | 0.70 | 0.57 | 0.45 | 0.63 | 0.47 | 0.65 |
| BETWEEN 15 AND 16 | 0.50 | 0.52 | 0.42 | 0.53 | 0.61 | 0.49 | 0.44 |
| BETWEEN 16 AND 17 | 0.56 | 0.80 | 0.50 | 0.56 | 0.61 | 0.58 | 0.44 |
| BETWEEN 17 AND 18 | 0.62 | 0.83 | 0.60 | 0.77 | 0.68 | 0.77 | 0.50 |
| BETWEEN 18 AND 19 | 0.61 | 0.73 | 0.67 | 0.80 | 0.53 | 0.63 | 0.66 |
| BETWEEN 19 AND 20 | 0.57 | 0.59 | 0.70 | 0.69 | 0.38 | 0.62 | 0.59 |
| BETWEEN 20 AND 21 | 0.58 | 0.50 | 0.63 | 0.64 | 0.46 | 0.57 | 0.64 |
| BETWEEN 21 AND 22 | 0.73 | 0.59 | 0.70 | 0.65 | 0.85 | 0.62 | 0.61 |
| BETWEEN 22 AND 23 | 0.70 | 0.75 | 0.86 | 0.56 | 0.93 | 0.70 | 0.65 |
| BETWEEN 23 AND 24 | 0.26 | 0.27 | 0.26 | 0.20 | 0.29 | 0.27 | 0.26 |
| BETWEEN 24 AND 25 | 0.29 | 0.25 | 0.24 | 0.26 | 0.21 | 0.24 | 0.21 |
| BETWEEN 25 AND 26 | 0.25 | 0.14 | 0.24 | 0.16 | 0.27 | 0.24 | 0.24 |
| BETWEEN 26 AND 27 | 0.26 | 0.27 | 0.26 | 0.20 | 0.29 | 0.27 | 0.26 |
| BETWEEN 27 AND 28 | 0.29 | 0.25 | 0.24 | 0.26 | 0.21 | 0.24 | 0.21 |
| BETWEEN 28 AND 29 | 0.25 | 0.14 | 0.24 | 0.16 | 0.27 | 0.24 | 0.24 |

Fig. 10

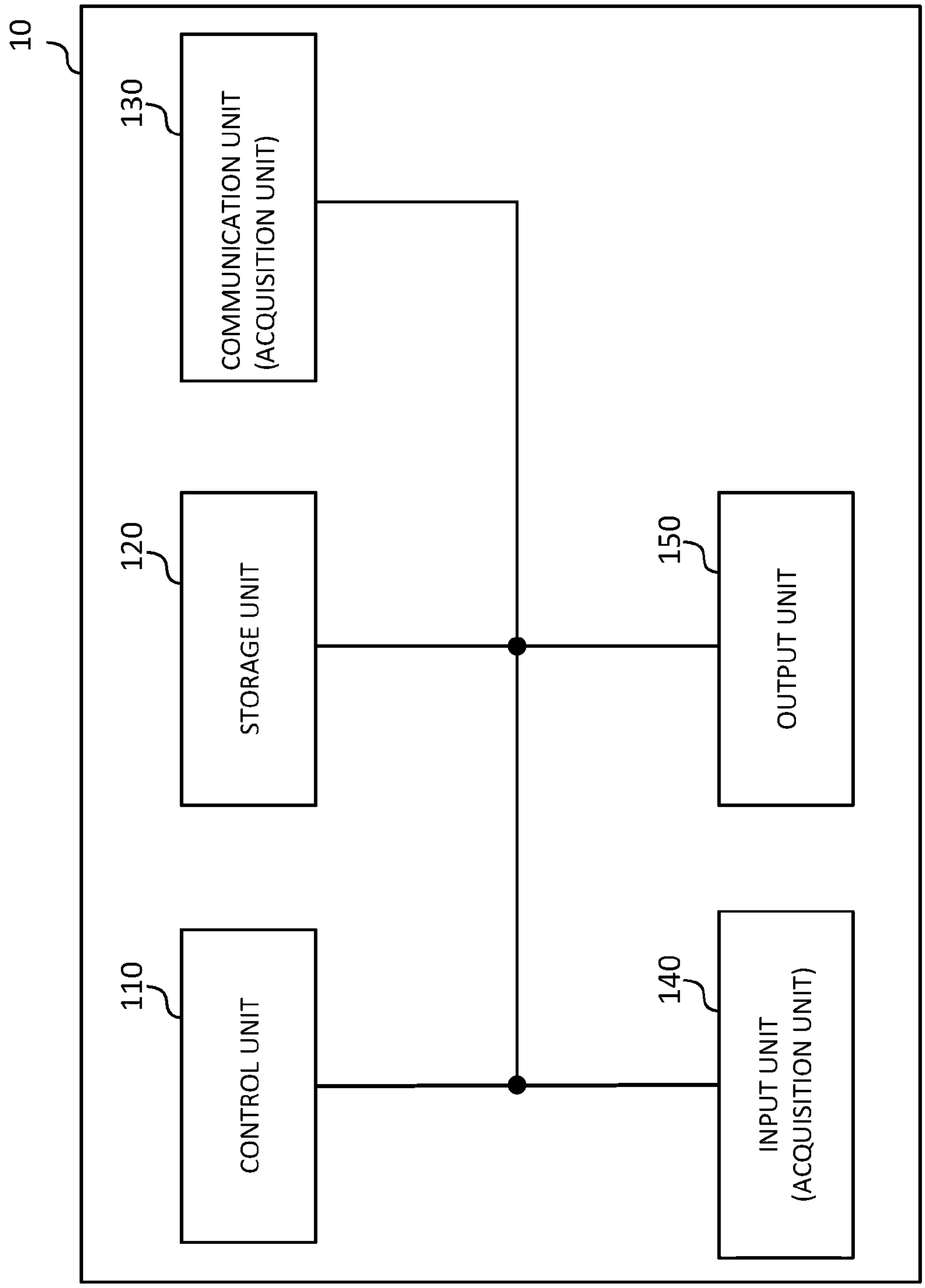
10
130
COMMUNICATION UNIT
(ACQUISITION UNIT)
120
STORAGE UNIT
110
CONTROL UNIT
150
OUTPUT UNIT
140
INPUT UNIT
(ACQUISITION UNIT)

Fig. 11

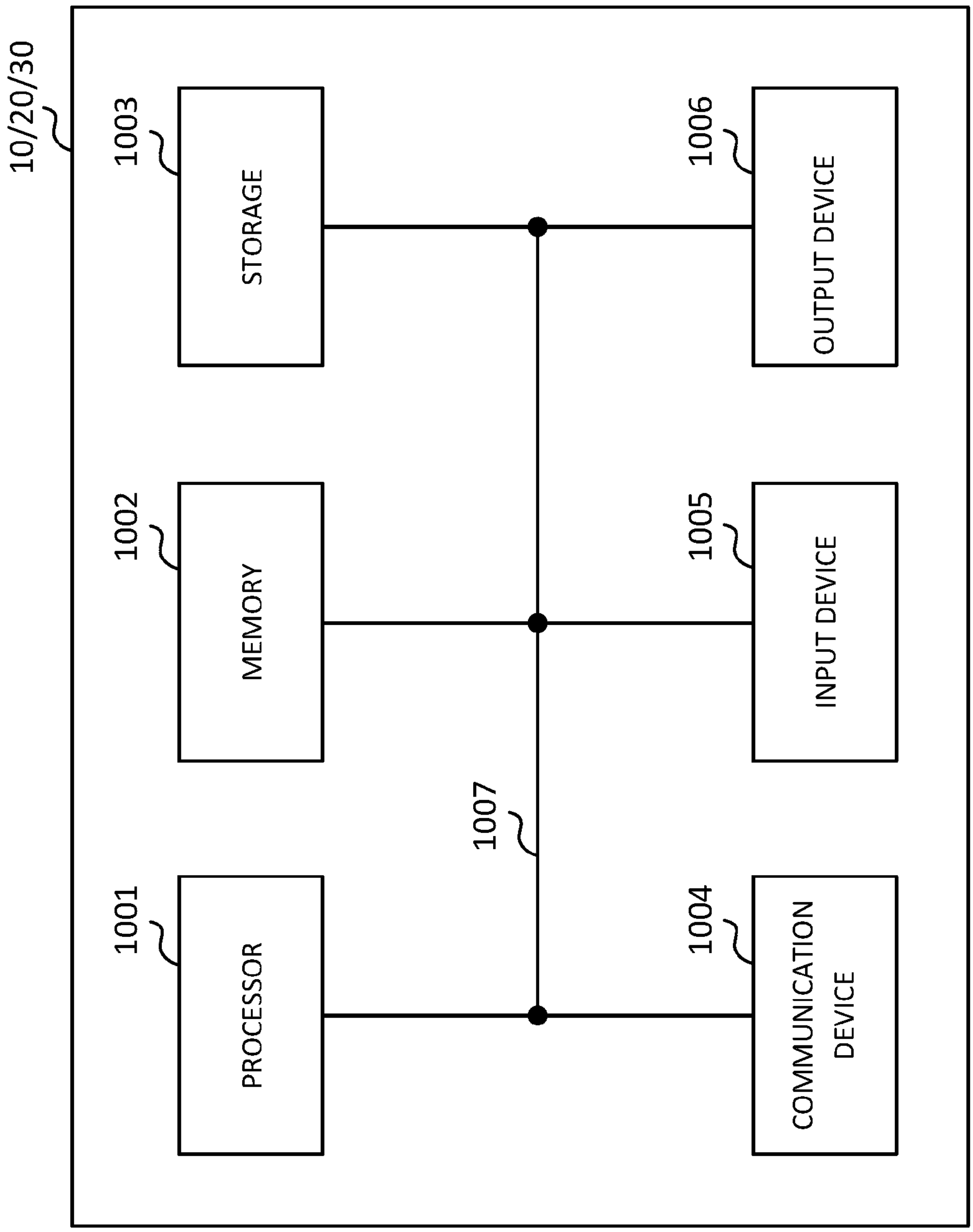
10/20/30
1001
PROCESSOR
1002
MEMORY
1003
STORAGE
1004
COMMUNICATION DEVICE
1005
INPUT DEVICE
1006
OUTPUT DEVICE
1007

**INTERNATIONAL SEARCH REPORT**

International application No. PCT/JP2020/024019

A. CLASSIFICATION OF SUBJECT MATTER
G06Q 30/02(2012.01)i
FI: G06Q30/02 444

According to International Patent Classification (IPC) or to both national classification and IPC

B. FIELDS SEARCHED

Minimum documentation searched (classification system followed by classification symbols)
G06Q30/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2016-9914 A (VIDEO RESEARCH LTD.) 18.01.2016 (2016-01-18) entire text, all drawings | 1-7 |
| A | JP 2017-151821 A (CULTURE CONVENIENCE CLUB CO., LTD.) 31.08.2017 (2017-08-31) entire text, all drawings | 1-7 |
| A | JP 2009-88777 A (DENTSU INC.) 23.04.2009 (2009-04-23) entire text, all drawings | 1-7 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 August 2020 (27.08.2020) | 08 September 2020 (08.09.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/024019

| Patent Documents referred in the Report | Publication Date | Patent Family | Publication Date |
|---|---|---|---|
| JP 2016-9914 A | 18 Jan. 2016 | (Family: none) | |
| JP 2017-151821 A | 31 Aug. 2017 | (Family: none) | |
| JP 2009-88777 A | 23 Apr. 2009 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000124867 A
- JP 2019114836 A